# EUROPEAN PATENT APPLICATION

(11) **EP 4 261 195 A1**
(43) Date of publication of application: **18.10.2023**
(21) Application number: 21903392.5
(22) Date of filing: 07.12.2021
(51) Int. Cl.: C03C 27/12, B32B 17/10

(54) **LAMINATED GLASS**

(30) Priority: 09.12.2020 JP 2020204447
(71) Applicant: SEKISUI CHEMICAL CO., LTD., Osaka-shi Osaka 530-8565 (JP)
(72) Inventor: OKAJIMA, Moyuru, Kouka-shi, Shiga 528-8585 (JP); YAMAGUCHI, Kouhei, Kouka-shi, Shiga 528-8585 (JP); KIDO, Koji, 6045JB Roermond (NL); YAMAMOTO, Masaki, Winchester, Kentucky 40391 (US); FUJIOKA, Sho, 6045JB Roermond (NL)
(74) Representative: Ter Meer Steinmeister & Partner
(86) International application number: PCT/JP2021/044870
(87) International publication number: WO 2022/124293

(57) **Abstract**

Provided is a laminated glass having an achromatic color or a color close to achromatic color despite the use of colored glass. A laminated glass according to the present invention includes: a first lamination glass member which is colored glass; a second lamination glass member; and a colored interlayer film, the colored interlayer film is arranged between the first lamination glass member and the second lamination glass member, and the laminated glass has a color coordinate a* in L*a*b* color system of -5 or more and 5 or less, and a color coordinate b* in L*a*b* color system of -5 or more and 5 or less.

## Description

### TECHNICAL FIELD

The present invention relates to laminated glass.

### BACKGROUND ART

Since laminated glass generates only a small amount of scattering glass fragments even when subjected to external impact and broken, laminated glass is excellent in safety. As such, laminated glass is widely used for automobiles, railway vehicles, aircraft, ships, buildings and the like. Laminated glass is produced by sandwiching an interlayer film between a pair of glass plates (lamination glass members). As the lamination glass member, colored glass such as green glass is sometimes used (for example, Patent Document 1).

### Related Art Document

### Patent Document

Patent Document 1: JP 2005-139046 A

### SUMMARY OF THE INVENTION

### PROBLEMS TO BE SOLVED BY THE INVENTION

By using colored glass such as green glass as the lamination glass member, it is possible to enhance the heat shielding property of the laminated glass. However, the laminated glass in which colored glass is used, by itself has certain degree of color caused by the colored glass. For example, the laminated glass in which green glass is used has pale green color. Therefore, when the laminated glass is used for window glass of an automobile, the interior of the automobile seen through the window glass can look with a tinge of green.

It is an object of the present invention to provide a laminated glass having an achromatic color or a color close to achromatic color despite the use of colored glass.

### MEANS FOR SOLVING THE PROBLEMS

According to a broad aspect of the present invention, there is provided a laminated glass including a first lamination glass member which is colored glass, a second lamination glass member, and a colored interlayer film, the colored interlayer film being arranged between the first lamination glass member and the second lamination glass member, the laminated glass having a color coordinate a* in L*a*b* color system of -5 or more and 5 or less, and a color coordinate b* in L*a*b* color system of -5 or more and 5 or less.

In a specific aspect of the laminated glass according to the present invention, a product of a color coordinate a* in L*a*b* color system of a lamination glass member laminate which is a laminate of the first lamination glass member and the second lamination glass member, and a color coordinate a* in L*a*b* color system of the colored interlayer film is a negative value.

In a specific aspect of the laminated glass according to the present invention, a sum of a color coordinate a* in L*a*b* color system of a lamination glass member laminate which is a laminate of the first lamination glass member and the second lamination glass member, and a color coordinate a* in L*a*b* color system of the colored interlayer film is 4 or less.

In a specific aspect of the laminated glass according to the present invention, a color coordinate L* in L*a*b* color system is 84 or more and 98 or less.

In a specific aspect of the laminated glass according to the present invention, the first lamination glass member is green glass.

In a specific aspect of the laminated glass according to the present invention, the second lamination glass member is colored glass.

In a specific aspect of the laminated glass according to the present invention, the colored interlayer film contains a thermoplastic resin.

In a specific aspect of the laminated glass according to the present invention, a color coordinate a* in L*a*b* color system of the colored interlayer film is 2 or more and 10 or less.

In a specific aspect of the laminated glass according to the present invention, the colored interlayer film contains a coloring agent.

In a specific aspect of the laminated glass according to the present invention, the colored interlayer film contains a pigment.

In a specific aspect of the laminated glass according to the present invention, the pigment includes a perylene compound, a threne compound, a quinacridone compound, a diketopyrrolopyrrole compound, an anthraquinone compound, a perinone compound, a phthalocyanine compound, an indanthrene compound, an indigo compound, a nickel complex compound, an azo compound or carbon black.

In a specific aspect of the laminated glass according to the present invention, a content of the pigment in 100% by weight of the colored interlayer film is 0.5% by weight or less.

In a specific aspect of the laminated glass according to the present invention, a content of the pigment in 100% by weight of the colored interlayer film is less than 0.015% by weight.

In a specific aspect of the laminated glass according to the present invention, the colored interlayer film includes a first layer, and a second layer arranged on a first surface side of the first layer.

In a specific aspect of the laminated glass according to the present invention, the laminated glass has one end and the other end being at the opposite side of the one end, and the other end has a thickness larger than a thickness of the one end.

In a specific aspect of the laminated glass according to the present invention, the colored interlayer film has a gradation pattern in plan view.

### EFFECT OF THE INVENTION

The laminated glass according to the present invention includes a first lamination glass member which is colored glass, a second lamination glass member, and a colored interlayer film, and the colored interlayer film is arranged between the first lamination glass member and the second lamination glass member. In the laminated glass according to the present invention, a color coordinate a* in L*a*b* color system is -5 or more and 5 or less, and a color coordinate b* in L*a*b* color system is -5 or more and 5 or less. Since the laminated glass according to the present invention is provided with the above configuration, the laminated glass has an achromatic color or a color close to achromatic color despite the use of colored glass.

### BRIEF DESCRIPTION OF DRAWINGS

[Fig. 1] Fig. 1 is a sectional view schematically showing laminated glass in accordance with a first embodiment of the present invention.
[Fig. 2] Fig. 2 is a sectional view schematically showing laminated glass in accordance with a second embodiment of the present invention.
[Fig. 3] Fig. 3 is a sectional view schematically showing a laminated glass in accordance with a third embodiment of the present invention.

### MODES FOR CARRYING OUT THE INVENTION

Hereinafter, the details of the present invention will be described.

The laminated glass according to the present invention includes a first lamination glass member which is colored glass, a second lamination glass member, and a colored interlayer film (colored interlayer film for laminated glass), and the colored interlayer film is arranged between the first lamination glass member and the second lamination glass member. In the laminated glass according to the present invention, a color coordinate a* in L*a*b* color system is -5 or more and 5 or less, and a color coordinate b* in L*a*b* color system is -5 or more and 5 or less.

Since the laminated glass according to the present invention is provided with the above configuration, the laminated glass has an achromatic color or a color close to achromatic color despite the use of colored glass.

In the laminated glass according to the present invention, the colored interlayer film having complementary color with respect to the first lamination glass member which is colored glass, and the second lamination glass member which may be colored glass is used. For example, when green glass is used as colored glass, an interlayer film colored into a reddish color is used. By combining the lamination glass member and the colored interlayer film having complementary colors, it is possible to make the color of the laminated glass be an achromatic color or a color close to achromatic color.

Also, since colored glass is used in the laminated glass according to the present invention, it is possible to enhance the heat shielding property compared with laminated glass in which colored glass is not used.

Hereinafter, specific embodiments of the present invention will be described with reference to the drawings.

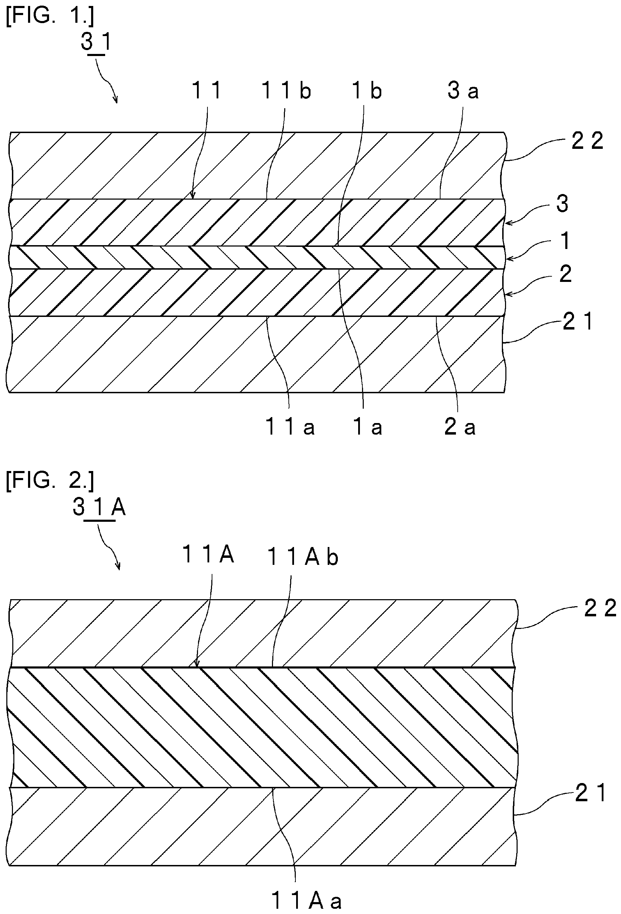

Fig. 1 is a sectional view schematically showing laminated glass in accordance with a first embodiment of the present invention.

A laminated glass 31 shown in Fig. 1 includes a first lamination glass member 21, a second lamination glass member 22 and a colored interlayer film 11. The first lamination glass member 21 is colored glass.

The colored interlayer film 11 has a first layer 1, a second layer 2, and a third layer 3. The colored interlayer film 11 has a three-layer structure. The second layer 2 is arranged on a first surface (one surface) 1a side of the first layer 1 to be layered thereon. The third layer 3 is arranged on a second surface (other surface) 1b side opposite to the first surface 1a of the first layer 1 to be layered thereon.

The first lamination glass member 21 is layered on a first surface 11a of the colored interlayer film 11. The second lamination glass member 22 is layered on a second surface 11b opposite to the first surface 11a of the colored interlayer film 11. The first lamination glass member 21 is layered on an outer surface of the second layer 2. The second lamination glass member 22 is layered on an outer surface of the third layer 3.

Fig. 2 is a sectional view schematically showing laminated glass in accordance with a second embodiment of the present invention.

A laminated glass 31A shown in Fig. 2 includes the first lamination glass member 21, the second lamination glass member 22 and a colored interlayer film 11A. The first lamination glass member 21 is colored glass.

The colored interlayer film 11A is a single-layered colored interlayer film having a one-layer structure. The colored interlayer film 11A is the first layer.

The first lamination glass member 21 is layered on a first surface 11Aa of the colored interlayer film 11A. The second lamination glass member 22 is layered on a second surface 11Ab opposite to the first surface 11Aa of the colored interlayer film 11A.

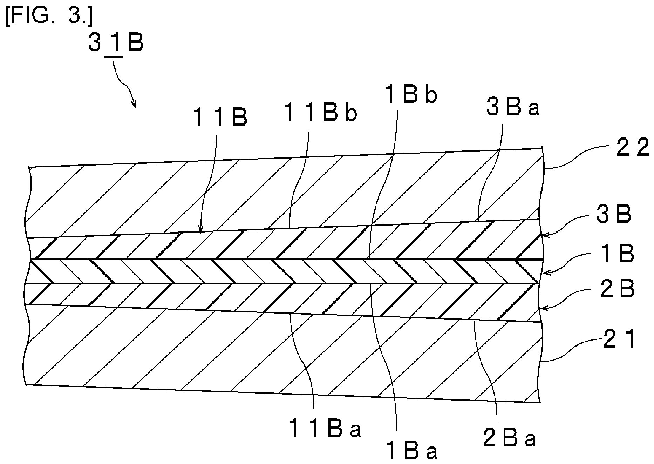

Fig. 3 is a sectional view schematically showing a laminated glass in accordance with a third embodiment of the present invention.

A laminated glass 31B shown in Fig. 3 includes the first lamination glass member 21, the second lamination glass member 22 and a colored interlayer film 11B. The first lamination glass member 21 is colored glass.

The colored interlayer film 11B has a first layer 1B, a second layer 2B, and a third layer 3B. The colored interlayer film 11B has a three-layer structure. The second layer 2B is arranged on a first surface (one surface) 1Ba side of the first layer 1B to be layered thereon. The third layer 3B is arranged on a second surface (other surface) 1Bb side opposite to the first surface 1Ba of the first layer 1B to be layered thereon.

The sectional shape in the thickness direction of the first layer 1B is a rectangular shape. The sectional shape in the thickness direction of each of the second layer 2B and the third layer 3B is a wedge-like shape. Thicknesses of one ends of the second layer 2B and the third layer 3B are smaller than thicknesses of the other ends opposite to the one ends. That is, thicknesses of the other ends of the second layer 2B and the third layer 3B are larger than thicknesses of one ends.

The first lamination glass member 21 is layered on a first surface 11Ba of the colored interlayer film 11B. The second lamination glass member 22 is layered on a second surface 11Bb opposite to the first surface 11Ba of the colored interlayer film 11B. The first lamination glass member 21 is layered on an outer surface of the second layer 2B. The second lamination glass member 22 is layered on an outer surface of the third layer 3B.

Thicknesses of the other ends of the colored interlayer film 11B and the laminated glass 31B are larger than thicknesses of one ends.

The laminated glass according to the present invention may be a laminated glass in which the one end and the other end of the laminated glass have the same thickness as shown in Figs. 1, 2, or may be a laminated glass in which the thickness of the other end of the laminated glass is larger than the thickness of the one end (wedge-like laminated glass) as shown in Fig. 3. Also, the laminated glass according to the present invention may be a wedge-like laminated glass including a colored interlayer film with a wedge-like cross-sectional shape in the thickness direction, and a lamination glass member with a rectangular cross-sectional shape in the thickness direction, or may be a wedge-like laminated glass including a colored interlayer film with a rectangular cross-sectional shape in the thickness direction, and a lamination glass member with a wedge-like cross-sectional shape in the thickness direction. Furthermore, the laminated glass according to the present invention may be a wedge-like laminated glass including a colored interlayer film with a wedge-like cross-sectional shape in the thickness direction, and a lamination glass member with a wedge-like cross-sectional shape in the thickness direction.

In the present invention, a color coordinate a* and a color coordinate b* in L*a*b* color system of laminated glass are measured, and a color coordinate L* is occasionally measured. Also, in the present invention, a color coordinate a*, a color coordinate b* and a color coordinate L* in L*a*b* color system of each of the first lamination glass member and the second lamination glass member are occasionally measured. Also, in the present invention, a color coordinate a*, a color coordinate b* and a color coordinate L* in L*a*b* color system of a lamination glass member laminate which is a laminate of the first lamination glass member and the second lamination glass member are occasionally measured. The lamination glass member laminate has a layered structure of the first lamination glass member/the second lamination glass member. Also, in the present invention, a color coordinate a*, a color coordinate b* and a color coordinate L* in L*a*b* color system of the colored interlayer film are occasionally measured.

A color coordinate a*, a color coordinate b* and a color coordinate L* in L*a*b* color system of the laminated glass, the first lamination glass member, the second lamination glass member, the lamination glass member laminate and the colored interlayer film are measured in accordance with JIS Z8781. A color coordinate a*, a color coordinate b* and a color coordinate L* of the laminated glass, the first lamination glass member, the second lamination glass member, the lamination glass member laminate and the colored interlayer film mean values measured at a center position between the one end and the other end of each measuring object. The one end and the other end are end parts of both sides facing each other in the measuring object.

A color coordinate a*, a color coordinate b* and a color coordinate L* in L*a*b* color system of the laminated glass are measured in the above-described method using the laminated glass itself.

A color coordinate a*, a color coordinate b* and a color coordinate L* in L*a*b* color system of the first lamination glass member and the second lamination glass member are measured in the above-described method by using the first lamination glass member itself or the second lamination glass member itself.

A color coordinate a*, a color coordinate b* and a color coordinate L* in L*a*b* color system of the lamination glass member laminate are measured in the above-described method by using a lamination glass member laminate in a state that two lamination glass members, namely, the first lamination glass member and the second lamination glass member are layered.

A color coordinate a*, a color coordinate b* and a color coordinate L* in L*a*b* color system of the colored interlayer film are measured in the following manner when a colored interlayer film before being prepared into laminated glass is used. The colored interlayer film is sandwiched between two polyethylene terephthalate sheets (PET sheets) to obtain a first laminate. The obtained first laminate is sandwiched between two sheets of glass and fixed with a heat-resistant tape to obtain a second laminate. The obtained second laminate is subjected to preliminary pressing and an autoclave treatment. Then, the two sheets of glass and the two sheets of PET sheets are peeled off to obtain the colored interlayer film. In this way, the uneven surfaces (embossed surfaces) of the colored interlayer film can be made into flat surfaces. Using the obtained colored interlayer film itself, measurement is conducted in the above-described method. As the PET sheet, "Polyester film Lumirror #100-T60" available from TORAY INDUSTRIES, INC. is favorably used as the PET sheet.

A color coordinate a*, a color coordinate b* and a color coordinate L* in L*a*b* color system of the colored interlayer film are measured in the following manner when a colored interlayer film after being prepared into laminated glass is used. The lamination glass members are peeled off from the laminated glass to obtain the colored interlayer film. Using the obtained colored interlayer film itself, measurement is conducted in the above-described method.

From the viewpoint of exerting the effect of the present invention, in the laminated glass according to the present invention, a color coordinate a* in L*a*b* color system of the laminated glass is -5 or more and 5 or less, and a color coordinate b* in L*a*b* color system of the laminated glass is -5 or more and 5 or less.

A color coordinate a* in L*a*b* color system of the laminated glass is preferably -4.5 or more, more preferably -4 or more, still more preferably -3.5 or more, further preferably -3 or more, still further preferably -2.5 or more, especially preferably -2 or more, still especially preferably -1.5 or more, most preferably -1 or more. A color coordinate a* in L*a*b* color system of the laminated glass is preferably 4.5 or less, more preferably 4 or less, still more preferably 3.5 or less, further preferably 3 or less, still further preferably 2.5 or less, especially preferably 2 or less, still especially preferably 1.5 or less, most preferably 1 or less. When the color coordinate a* is the above lower limit or more and the above upper limit or less, it is possible to exert the effect of the present invention more effectively.

A color coordinate b* in L*a*b* color system of the laminated glass is preferably -4.5 or more, more preferably -4 or more, still more preferably -2 or more, further preferably 0 or more, still further preferably 1 or more, especially preferably 1.5 or more. A color coordinate b* in L*a*b* color system of the laminated glass is preferably 4.5 or less, more preferably 4 or less, further preferably 3.5 or less, especially preferably 3 or less. When the color coordinate b* is the above lower limit or more and the above upper limit or less, it is possible to exert the effect of the present invention more effectively.

A color coordinate L* in L*a*b* color system of the laminated glass is preferably 8 or more, more preferably 10 or more, still more preferably 20 or more, further preferably 40 or more, still further preferably 60 or more, especially preferably 70 or more, still especially preferably 80 or more. It is preferred that a color coordinate L* in L*a*b* color system of the laminated glass exceed 80, and a color coordinate L* in L*a*b* color system of the laminated glass is preferably 84 or more, more preferably 86 or more, further preferably 87 or more, and is preferably 98 or less, more preferably 95 or less, further preferably 92 or less, especially preferably 90 or less. When the color coordinate L* is the above lower limit or more and the above upper limit or less, it is possible to exert the effect of the present invention more effectively.

The first lamination glass member is colored glass.

A color coordinate a* in L*a*b* color system of the first lamination glass member is preferably -10 or more, more preferably -8 or more, further preferably -6 or more, especially preferably -5 or more, and is preferably 0 or less, more preferably -2 or less, further preferably -3 or less. When the color coordinate a* is the above lower limit or more and the above upper limit or less, it is possible to further enhance the heat shielding property of the laminated glass.

A color coordinate b* in L*a*b* color system of the first lamination glass member is preferably 0 or more, more preferably 0.3 or more, further preferably 0.5 or more, and is preferably 3 or less, more preferably 2.8 or less, further preferably 2 or less. When the color coordinate b* is the above lower limit or more and the above upper limit or less, it is possible to further enhance the heat shielding property of the laminated glass.

A color coordinate L* in L*a*b* color system of the first lamination glass member is preferably 88 or more, more preferably 90 or more, further preferably 92 or more, and is preferably 97 or less, more preferably 96 or less, further preferably 95 or less. When the color coordinate L* is the above lower limit or more and the above upper limit or less, it is possible to further enhance the heat shielding property of the laminated glass.

The second lamination glass member may be colored glass, or need not be colored glass.

A color coordinate a* in L*a*b* color system of the second lamination glass member which is colored glass is preferably -10 or more, more preferably -8 or more, further preferably -6 or more, especially preferably -5 or more, and is preferably 0 or less, more preferably -2 or less, further preferably -3 or less. When the color coordinate a* is the above lower limit or more and the above upper limit or less, it is possible to further enhance the heat shielding property of the laminated glass.

A color coordinate b* in L*a*b* color system of the second lamination glass member which is colored glass is preferably 0 or more, more preferably 0.3 or more, further preferably 0.5 or more, and is preferably 3 or less, more preferably 2.8 or less, further preferably 2 or less. When the color coordinate b* is the above lower limit or more and the above upper limit or less, it is possible to further enhance the heat shielding property of the laminated glass.

A color coordinate L* in L*a*b* color system of the second lamination glass member which is colored glass is preferably 88 or more, more preferably 90 or more, further preferably 92 or more, and is preferably 97 or less, more preferably 96 or less, further preferably 95 or less. When the color coordinate L* is the above lower limit or more and the above upper limit or less, it is possible to further enhance the heat shielding property of the laminated glass.

A color coordinate a* in L*a*b* color system of the second lamination glass member which is not colored glass is preferably -2 or more and is preferably 2 or less.

A color coordinate b* in L*a*b* color system of the second lamination glass member which is not colored glass is preferably -2 or more and is preferably 2 or less.

A color coordinate L* in L*a*b* color system of the second lamination glass member which is not colored glass is preferably 90 or more and is preferably 98 or less.

A color coordinate a* in L*a*b* color system of the lamination glass member laminate is preferably -10 or more, more preferably -8 or more, further preferably -7 or more, especially preferably -6 or more, and is preferably -2 or less, more preferably -3 or less, further preferably -4 or less. When the color coordinate a* is the above lower limit or more and the above upper limit or less, it is possible to further enhance the heat shielding property of the laminated glass.

A color coordinate b* in L*a*b* color system of the lamination glass member laminate is preferably 0 or more, more preferably 0.5 or more, further preferably 0.7 or more, and is preferably 6 or less, more preferably 4 or less, further preferably 3 or less, especially preferably 2 or less. When the color coordinate b* is the above lower limit or more and the above upper limit or less, it is possible to further enhance the heat shielding property of the laminated glass.

A color coordinate L* in L*a*b* color system of the lamination glass member laminate is preferably 84 or more, more preferably 86 or more, further preferably 87 or more, and is preferably 92 or less, more preferably 90 or less, further preferably 89 or less. When the color coordinate L* is the above lower limit or more and the above upper limit or less, it is possible to further enhance the heat shielding property of the laminated glass.

The colored interlayer film is a colored interlayer film.

A color coordinate a* in L*a*b* color system of the colored interlayer film is preferably 1 or more, more preferably 2 or more, further preferably 3 or more, especially preferably 3.5 or more, and is preferably 10 or less, more preferably 8 or less, further preferably 7.5 or less. When the color coordinate a* is the above lower limit or more and the above upper limit or less, it is possible to exert the effect of the present invention more effectively.

A color coordinate b* in L*a*b* color system of the colored interlayer film is preferably -10 or more, more preferably -8 or more, still more preferably -5 or more, further preferably -3 or more, still further preferably -1 or more, especially preferably 0 or more, most preferably 1 or more, and is preferably 5 or less, more preferably 3.5 or less, further preferably 3 or less. When the color coordinate b* is the above lower limit or more and the above upper limit or less, it is possible to exert the effect of the present invention more effectively.

A color coordinate L* in L*a*b* color system of the colored interlayer film is preferably 8 or more, more preferably 10 or more, still more preferably 20 or more, further preferably 40 or more, still further preferably 60 or more, especially preferably 70 or more, still especially preferably 80 or more. It is preferred that a color coordinate L* in L*a*b* color system of the colored interlayer films exceed 80, and a color coordinate L* in L*a*b* color system of the colored interlayer film is preferably 88 or more, more preferably 90 or more, further preferably 91 or more, and is preferably 98 or less, more preferably 95 or less, further preferably 94 or less. When the color coordinate L* is the above lower limit or more and the above upper limit or less, it is possible to exert the effect of the present invention more effectively.

From the viewpoint of exerting the effect of the present invention more effectively by combining the laminated glass member and the colored interlayer film having complementary colors, it is preferred that a product of a color coordinate a* in L*a*b* color system of the lamination glass member laminate, and a color coordinate a* in L*a*b* color system of the colored interlayer film be a negative value.

A sum of a color coordinate a* in L*a*b* color system of the lamination glass member laminate, and a color coordinate a* in L*a*b* color system of the colored interlayer film is preferably 4 or less, more preferably 3 or less, further preferably 2 or less. It is preferred that the sum be as close to 0 as possible. When the sum is the above upper limit or less, it is possible to exert the effect of the present invention more effectively by combining the laminated glass member and the colored interlayer film having complementary colors. A sum of a color coordinate a* in L*a*b* color system of the lamination glass member laminate, and a color coordinate a* in L*a*b* color system of the colored interlayer film may be 0 or more, may be -2 or more, may be -3 or more, and may be -4 or more.

An absolute value of difference between a color coordinate a* in L*a*b* color system of the lamination glass member laminate, and a color coordinate a* in L*a*b* color system of the colored interlayer film is preferably 0 or more, more preferably 3 or more, and is preferably 15 or less, more preferably 13 or less. When the absolute value of difference is the above lower limit or more and the above upper limit or less, it is possible to exert the effect of the present invention more effectively.

From the viewpoint of exerting the effect of the present invention effectively, it is preferred that a color coordinate a* in L*a*b* color system of the lamination glass member laminate be a negative value, and a color coordinate a* in L*a*b* color system of the colored interlayer film be a positive value. From the viewpoint of exerting the effect of the present invention effectively, it is preferred that a color coordinate a* in L*a*b* color system of the first lamination glass member be a negative value, and a color coordinate a* in L*a*b* color system of the colored interlayer film be a positive value. From the viewpoint of exerting the effect of the present invention effectively, it is preferred that a color coordinate a* in L*a*b* color system of the first lamination glass member be a negative value, a color coordinate a* in L*a*b* color system of the second lamination glass member be a negative value, and a color coordinate a* in L*a*b* color system of the colored interlayer film be a positive value.

From the viewpoint of exerting the effect of the present invention effectively, it is preferred that a color coordinate b* in L*a*b* color system of the lamination glass member laminate be a positive value, and a color coordinate b* in L*a*b* color system of the colored interlayer film be 5 or less. From the viewpoint of exerting the effect of the present invention effectively, it is preferred that a color coordinate b* in L*a*b* color system of the first lamination glass member be a positive value, and a color coordinate b* in L*a*b* color system of the colored interlayer film be 5 or less. From the viewpoint of exerting the effect of the present invention effectively, it is preferred that a color coordinate b* in L*a*b* color system of the first lamination glass member be a positive value, a color coordinate b* in L*a*b* color system of the second lamination glass member be a positive value, and a color coordinate b* in L*a*b* color system of the colored interlayer film be 5 or less.

From the viewpoint of exerting the effect of the present invention effectively, it is preferred that a color coordinate b* in L*a*b* color system of the lamination glass member laminate be a positive value, and a color coordinate b* in L*a*b* color system of the colored interlayer film be a negative value. From the viewpoint of exerting the effect of the present invention effectively, it is preferred that a color coordinate b* in L*a*b* color system of the first lamination glass member be a positive value, and a color coordinate b* in L*a*b* color system of the colored interlayer film be a negative value. From the viewpoint of exerting the effect of the present invention effectively, it is preferred that a color coordinate b* in L*a*b* color system of the first lamination glass member be a positive value, a color coordinate b* in L*a*b* color system of the second lamination glass member be a positive value, and a color coordinate b* in L*a*b* color system of the colored interlayer film be a negative value.

A visible light transmittance of the lamination glass member laminate is preferably 65% or more, more preferably 68% or more, and is preferably 90% or less, more preferably 87% or less, further preferably 85% or less.

A visible light transmittance of the laminated glass is preferably 0% or more, more preferably 1% or more, still more preferably 10% or more, further preferably 30% or more, especially preferably 50% or more. It is preferred that the visible light transmittance of the laminated glass exceed 50%, and the visible light transmittance of the laminated glass is preferably 65% or more, more preferably 68% or more, further preferably 70% or more, and is preferably 90% or less, more preferably 87% or less, further preferably 85% or less.

The visible light transmittance is determined by measuring visible light transmittance at a wavelength ranging from 380 nm to 780 nm of the lamination glass member laminate or the laminated glass in accordance with JIS R3212 using a spectrophotometer (for example, "U-4100" available from Hitachi High-tech Corporation).

Hereinafter, members used in the laminated glass according to the present invention are further described.

### (First and second lamination glass members)

The first lamination glass member is colored glass. The second lamination glass member may be colored glass, or need not be colored glass. The second lamination glass member may be transparent glass. The first lamination glass member and the second lamination glass member may be the same kinds of colored glass, or may be the different kinds of colored glass.

Examples of the colored glass include green glass, heat ray-absorbing plate glass, heat ray-reflecting plate glass, polished plate glass, figured glass, wired glass, and the like. In the wired glass, the wire may be netted.

When the second lamination glass member is not colored glass, examples of the second lamination glass member include clear glass, polished plate glass, figured glass, and wired glass, and the like. Examples of the second lamination glass member include a PET film (polyethylene terephthalate film) and the like.

From the viewpoint of further enhancing the heat shielding property, it is preferred that the first lamination glass member be green glass.

From the viewpoint of further enhancing the heat shielding property, the second lamination glass member is preferably colored glass, and more preferably green glass.

The thickness of each of the first lamination glass member and the second lamination glass member is preferably 0.5 mm or more, more preferably 0.7 mm or more, further preferably 1 mm or more, and is preferably 5 mm or less, more preferably 3 mm or less. When the second lamination glass member is a PET film, the average thickness of the PET film is preferably 0.03 mm or more and is preferably 0.5 mm or less.

### (Colored interlayer film for laminated glass)

The colored interlayer film may have a one-layer structure, a two-layer structure, a two or more-layer structure, a three-layer structure, a three or more-layer structure, a four or more-layer structure, a five or more-layer structure, or a six or more-layer structure.

The colored interlayer film includes at least the first layer. The colored interlayer film having a two or more-layer structure includes at least the first layer, and the second layer. In this case, the second layer is arranged on a first surface (one surface) side of the first layer. The colored interlayer film having a three or more-layer structure includes at least the first layer, the second layer, and the third layer. In this case, the second layer is arranged on a first surface side of the first layer, and the third layer is arranged on a second surface (other surface) side opposite to the first surface of the first layer.

In the colored interlayer film, other layer may be arranged between the first layer and the second layer, and between the first layer and the third layer. It is preferred that the first layer and the second layer be directly layered, and it is preferred that the first layer and the third layer be directly layered.

The structure of the colored interlayer film may partially vary. For example, the colored interlayer film may have a part having a one-layer structure, and a part having a two or more-layer structure. The colored interlayer film may have a part having a one-layer structure, and a part having a three or more-layer structure. The colored interlayer film may have a part having a two-layer structure, and a part having a three or more-layer structure.

### <Coloring agent>

It is preferred that the colored interlayer film contain a coloring agent. The first layer may contain or need not contain a coloring agent. When the colored interlayer film is a monolayer interlayer film including only the first layer, it is preferred that the first layer contain a coloring agent. When the colored interlayer film is a multilayer interlayer film having a two or more-layer structure including the first layer and the second layer, the first layer may contain a coloring agent, or need not contain a coloring agent. It is preferred that the second layer contain a coloring agent. It is preferred that the third layer contain a coloring agent. By using the coloring agent, it is possible to favorably color the interlayer film to desired color tone. One kind of the coloring agent may be used alone and two or more kinds thereof may be used in combination.

Examples of the coloring agent include a pigment, a dye and the like. The coloring agent may be a pigment, may be a dye, and may be both of a pigment and a dye. There also exists a coloring agent that is classified both as a pigment and as a dye.

### Pigment:

The coloring agent may contain a pigment or may be a pigment. It is preferred that the colored interlayer film contain a pigment. The first layer may contain or need not contain a pigment. When the colored interlayer film is a monolayer interlayer film including only the first layer, it is preferred that the first layer contain a pigment. When the colored interlayer film is a multilayer interlayer film having a two or more-layer structure including the first layer and the second layer, the first layer may contain a pigment, or need not contain a pigment. It is preferred that the second layer contain a pigment. The second layer need not contain a pigment. It is preferred that the third layer contain a pigment. The third layer need not contain a pigment. It is preferred that the second layer and the third layer contain a pigment. By using the pigment, it is possible to favorably color the interlayer film to desired color tone. As the pigment, only one kind may be used, two or more kinds may be used together, three or more kinds may be used together, and four or more kinds may be used together.

From the viewpoint of exerting the effect of the present invention more effectively, the interlayer film includes preferably two or more kinds of pigments, more preferably three or more kinds of pigments, further preferably four or more kinds of pigments. The interlayer film may contain twenty or less kinds of pigments, may contain ten or less kinds of pigments, and may contain five or less kinds of pigments.

Examples of the pigment include a perylene compound, a threne compound, a quinacridone compound, a diketopyrrolopyrrole compound, an anthraquinone compound, a perinone compound, a phthalocyanine compound, an indanthrene compound, an indigo compound, an isoindolinone compound, a nickel complex compound, a methine compound, an azomethine compound, dioxane, an azo compound and carbon black, and so on.

It is preferred that the pigment be a perylene compound, a threne compound, a quinacridone compound, a diketopyrrolopyrrole compound, an anthraquinone compound, a perinone compound, a phthalocyanine compound, an indanthrene compound, an indigo compound, a nickel complex compound, an azo compound or carbon black. It is preferred that the pigment include a perylene compound, a threne compound, a quinacridone compound, a diketopyrrolopyrrole compound, an anthraquinone compound, a perinone compound, a phthalocyanine compound, an indanthrene compound, an indigo compound, a nickel complex compound, an azo compound or carbon black. It is preferred that the pigment be a perylene compound, a threne compound, a quinacridone compound, a diketopyrrolopyrrole compound, an anthraquinone compound, a perinone compound, a phthalocyanine compound, an indanthrene compound, or an indigo compound. It is preferred that the pigment include a perylene compound, a threne compound, a quinacridone compound, a diketopyrrolopyrrole compound, an anthraquinone compound, a perinone compound, a phthalocyanine compound, an indanthrene compound, or an indigo compound. In these preferred embodiments, it is possible to exert the effect of the present invention more effectively, and in particular, when green glass is used as the colored glass, it is possible to exert the effect of the present invention still more effectively.

In 100% by weight of the layer containing the pigment, the content of the pigment is preferably 0.00001% by weight or more, more preferably 0.0001% by weight or more, further preferably 0.001% by weight or more, especially preferably 0.01% by weight or more, and is preferably 0.5% by weight or less, more preferably 0.1% by weight or less, further preferably 0.015% by weight or less, especially preferably less than 0.015% by weight, most preferably 0.01% by weight or less. In 100% by weight of the layer containing the pigment, the content of the pigment may be 0.1% by weight or more. When the content of the pigment is the above lower limit or more and the above upper limit or less (or less than the above upper limit), it is possible to exert the effect of the present invention more effectively.

In 100% by weight of the colored interlayer film, the content of the pigment is preferably 0.00001% by weight or more, more preferably 0.0001% by weight or more, further preferably 0.001% by weight or more, especially preferably 0.01% by weight or more, and is preferably 0.5% by weight or less, more preferably 0.1% by weight or less, further preferably 0.015% by weight or less, especially preferably less than 0.015% by weight, most preferably 0.01% by weight or less. In 100% by weight of the colored interlayer film, the content of the pigment may be 0.1% by weight or more. When the content of the pigment is the above lower limit or more and the above upper limit or less (or less than the above upper limit), it is possible to exert the effect of the present invention more effectively.

### Dye:

The coloring agent may contain a dye or may be a dye. It is preferred that the colored interlayer film contain a dye. The first layer may contain or need not contain a dye. When the colored interlayer film is a monolayer interlayer film including only the first layer, it is preferred that the first layer contain a dye. When the colored interlayer film is a multilayer interlayer film having a two or more-layer structure including the first layer and the second layer, the first layer may contain a dye, or need not contain a dye. It is preferred that the second layer contain a dye. It is preferred that the third layer contain a dye. By using the dye pigment, it is possible to favorably color the interlayer film to desired color tone. One kind of the dye may be used alone, and two or more kinds thereof may be used in combination.

Examples of the dye include a perylene compound, a threne compound, a quinacridone compound, a diketopyrrolopyrrole compound, an anthraquinone compound, a perinone compound, a phthalocyanine compound, an indanthrene compound, an indigo compound, an isoindolinone compound, a nickel complex compound, a methine compound, an azomethine compound, dioxane, and an azo compound, and so on.

It is preferred that the dye be a perylene compound, a threne compound, a quinacridone compound, a diketopyrrolopyrrole compound, an anthraquinone compound, a perinone compound, a phthalocyanine compound, an indanthrene compound, an indigo compound, or an azo compound. It is preferred that the dye include a perylene compound, a threne compound, a quinacridone compound, a diketopyrrolopyrrole compound, an anthraquinone compound, a perinone compound, a phthalocyanine compound, an indanthrene compound, an indigo compound, or an azo compound. In this case, it is possible to exert the effect of the present invention more effectively, and in particular, when green glass is used as the colored glass, it is possible to exert the effect of the present invention still more effectively.

In 100% by weight of the layer containing the dye, the content of the dye is preferably 0.00001% by weight or more, more preferably 0.0001% by weight or more, further preferably 0.001% by weight or more, especially preferably 0.01% by weight or more, and is preferably 0.5% by weight or less, more preferably 0.1% by weight or less, further preferably 0.015% by weight or less, especially preferably less than 0.015% by weight, most preferably 0.01% by weight or less. In 100% by weight of the layer containing the dye, the content of the dye may be 0.1% by weight or more. When the content of the dye is the above lower limit or more and the above upper limit or less (or less than the above upper limit), it is possible to exert the effect of the present invention more effectively.

In 100% by weight of the colored interlayer film, the content of the dye is preferably 0.00001% by weight or more, more preferably 0.0001% by weight or more, further preferably 0.001% by weight or more, and is preferably 0.1% by weight or less, more preferably less than 0.015% by weight, further preferably 0.01% by weight or less. When the content of the dye is the above lower limit or more and the above upper limit or less (or less than the above upper limit), it is possible to exert the effect of the present invention more effectively.

In 100% by weight of the layer containing the coloring agent, the content of the coloring agent is preferably 0.00001% by weight or more, more preferably 0.0001% by weight or more, further preferably 0.001% by weight or more, especially preferably 0.01% by weight or more, and is preferably 0.5% by weight or less, more preferably 0.1% by weight or less, further preferably 0.015% by weight or less, especially preferably less than 0.015% by weight, most preferably 0.01% by weight or less. In 100% by weight of the layer containing the coloring agent, the content of the coloring agent may be 0.1% by weight or more. When the content of the coloring agent is the above lower limit or more and the above upper limit or less (or less than the above upper limit), it is possible to exert the effect of the present invention more effectively.

In 100% by weight of the colored interlayer film, the content of the coloring agent is preferably 0.00001% by weight or more, more preferably 0.0001% by weight or more, further preferably 0.001% by weight or more, especially preferably 0.01% by weight or more, and is preferably 0.5% by weight or less, more preferably 0.1% by weight or less, further preferably 0.015% by weight or less, especially preferably less than 0.015% by weight, most preferably 0.01% by weight or less. In 100% by weight of the colored interlayer film, the content of the coloring agent may be 0.1% by weight or more. When the content of the coloring agent is the above lower limit or more and the above upper limit or less (or less than the above upper limit), it is possible to exert the effect of the present invention more effectively.

### <Thermoplastic resin>

It is preferred that the colored interlayer film contain a resin (hereinafter, sometimes described as a resin (0)). It is preferred that the colored interlayer film contain a thermoplastic resin (hereinafter, sometimes described as a thermoplastic resin (0)). It is preferred that the colored interlayer film contain a polyvinyl acetal resin (hereinafter, sometimes described as a polyvinyl acetal resin (0)) as the thermoplastic resin (0). It is preferred that the first layer contain a resin (hereinafter, sometimes described as a resin (1)). It is preferred that the first layer contain a thermoplastic resin (hereinafter, sometimes described as a thermoplastic resin (1)). It is preferred that the first layer contain a polyvinyl acetal resin (hereinafter, sometimes described as a polyvinyl acetal resin (1)) as the thermoplastic resin (1). It is preferred that the second layer contain a resin (hereinafter, sometimes described as a resin (2)). It is preferred that the second layer contain a thermoplastic resin (hereinafter, sometimes described as a thermoplastic resin (2)). It is preferred that the second layer contain a polyvinyl acetal resin (hereinafter, sometimes described as a polyvinyl acetal resin (2)) as the thermoplastic resin (2). It is preferred that the third layer contain a resin (hereinafter, sometimes described as a resin (3)). It is preferred that the third layer contain a thermoplastic resin (hereinafter, sometimes described as a thermoplastic resin (3)). It is preferred that the third layer contain a polyvinyl acetal resin (hereinafter, sometimes described as a polyvinyl acetal resin (3)) as the thermoplastic resin (3). The resin (1), the resin (2), and the resin (3) may be the same as or different from one another. For still higher sound insulating property, it is preferred that the resin (1) be different from the resin (2) and the resin (3). The thermoplastic resin (1), the thermoplastic resin (2), and the thermoplastic resin (3) may be the same or different from one another. For still higher sound insulating property, it is preferred that the thermoplastic resin (1) be different from the thermoplastic resin (2) and the thermoplastic resin (3). Each of the polyvinyl acetal resin (1), the polyvinyl acetal resin (2), and the polyvinyl acetal resin (3) may be the same or different from one another. For still higher sound insulating property, it is preferred that the polyvinyl acetal resin (1) be different from the polyvinyl acetal resin (2) and the polyvinyl acetal resin (3). One kind of each of the thermoplastic resin (0), the thermoplastic resin (1), the thermoplastic resin (2), and the thermoplastic resin (3) may be used alone and two or more kinds thereof may be used in combination. One kind of each of the polyvinyl acetal resin (0), the polyvinyl acetal resin (1), the polyvinyl acetal resin (2), and the polyvinyl acetal resin (3) may be used alone and two or more kinds thereof may be used in combination.

Examples of the thermoplastic resin include a polyvinyl acetal resin, an ethylene-vinyl acetate copolymer resin, an ethylene-acrylic acid copolymer resin, a polyurethane resin, an ionomer resin, a polyvinyl alcohol resin, and the like. Thermoplastic resins other than these may be used.

For example, the polyvinyl acetal resin can be produced by acetalizing polyvinyl alcohol (PVA) with an aldehyde. It is preferred that the polyvinyl acetal resin be an acetalized product of polyvinyl alcohol. The polyvinyl alcohol can be obtained, for example, by saponifying polyvinyl acetate. The saponification degree of the polyvinyl alcohol generally lies within the range of 70% by mole to 99.9% by mole.

The average polymerization degree of the polyvinyl alcohol (PVA) is preferably 200 or more, more preferably 500 or more, even more preferably 1500 or more, further preferably 1600 or more, especially preferably 2600 or more, most preferably 2700 or more and is preferably 5000 or less, more preferably 4000 or less, further preferably 3500 or less. When the average polymerization degree is the above lower limit or more, the penetration resistance of the laminated glass is further enhanced. When the average polymerization degree is the above upper limit or less, formation of a colored interlayer film is facilitated.

The average polymerization degree of the polyvinyl alcohol is determined by a method in accordance with JIS K6726 "Testing methods for polyvinyl alcohol".

The number of carbon atoms of the acetal group contained in the polyvinyl acetal resin is not particularly limited. The aldehyde used at the time of producing the polyvinyl acetal resin is not particularly limited. The number of carbon atoms of the acetal group in the polyvinyl acetal resin is preferably 3 to 5, more preferably 3 or 4. When the number of carbon atoms of the acetal group in the polyvinyl acetal resin is 3 or more, the glass transition temperature of the colored interlayer film is sufficiently lowered. The number of carbon atoms of the acetal group in the polyvinyl acetal resin may be 4 or 5.

The aldehyde is not particularly limited. In general, an aldehyde with 1 to 10 carbon atoms is suitably used. Examples of the aldehyde with 1 to 10 carbon atoms include propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, benzaldehyde, and the like. The aldehyde is preferably propionaldehyde, n-butyraldehyde, isobutyraldehyde, n-hexylaldehyde, or n-valeraldehyde, more preferably propionaldehyde, n-butyraldehyde or isobutyraldehyde, and further preferably n-butyraldehyde. One kind of the aldehyde may be used alone, and two or more kinds thereof may be used in combination.

The content of the hydroxyl group (the amount of hydroxyl groups) of the polyvinyl acetal resin (0) is preferably 15% by mole or more and more preferably 18% by mole or more and is preferably 40% by mole or less and more preferably 35% by mole or less. When the content of the hydroxyl group is the above lower limit or more, the adhesive force of the colored interlayer film is further enhanced. Moreover, when the content of the hydroxyl group is the above upper limit or less, the flexibility of the colored interlayer film is enhanced and the handling of the colored interlayer film is facilitated.

The content of the hydroxyl group (the amount of hydroxyl groups) of the polyvinyl acetal resin (1) is preferably 17% by mole or more, more preferably 20% by mole or more, and further preferably 22% by mole or more. The content of the hydroxyl group (the amount of hydroxyl groups) of the polyvinyl acetal resin (1) is preferably 30% by mole or less, more preferably 28% by mole or less, still more preferably 27% by mole or less, further preferably 25% by mole or less, especially preferably less than 25% by mole, most preferably 24% by mole or less. When the content of the hydroxyl group is the above lower limit or more, the mechanical strength of the colored interlayer film is further enhanced. In particular, when the content of the hydroxyl group of the polyvinyl acetal resin (1) is 20% by mole or more, the resin is high in reaction efficiency and is excellent in productivity, and moreover, when being 28% by mole or less, the sound insulating property of laminated glass is further enhanced. Moreover, when the content of the hydroxyl group is the above upper limit or less or less than the above upper limit, the flexibility of the colored interlayer film is enhanced and the handling of the colored interlayer film is facilitated.

The content of the hydroxyl group of the polyvinyl acetal resin (2) and the content of the hydroxyl group of the polyvinyl acetal resin (3) are preferably 25% by mole or more, more preferably 28% by mole or more, still more preferably 30% by mole or more, further preferably more than 31% by mole, still further preferably 31.5% by mole or more, especially preferably 32% by mole or more, and most preferably 33% by mole or more. The content of the hydroxyl group of the polyvinyl acetal resin (2) and the content of the hydroxyl group of the polyvinyl acetal resin (3) are preferably 38% by mole or less, more preferably 37% by mole or less, further preferably 36.5% by mole or less, especially preferably 36% by mole or less. When the content of the hydroxyl group is the above lower limit or more (or more than the above lower limit), the adhesive force of the colored interlayer film is further enhanced. Moreover, when the content of the hydroxyl group is the above upper limit or less, the flexibility of the colored interlayer film is enhanced and the handling of the colored interlayer film is facilitated.

From the viewpoint of further enhancing the sound insulating property, it is preferred that the content of the hydroxyl group of the polyvinyl acetal resin (1) be lower than the content of the hydroxyl group of the polyvinyl acetal resin (2). From the viewpoint of further enhancing the sound insulating property, it is preferred that the content of the hydroxyl group of the polyvinyl acetal resin (1) be lower than the content of the hydroxyl group of the polyvinyl acetal resin (3). From the viewpoint of still further enhancing the sound insulating property, the absolute value of difference between the content of the hydroxyl group of the polyvinyl acetal resin (1) and the content of the hydroxyl group of the polyvinyl acetal resin (2) is preferably 1% by mole or more, more preferably 5% by mole or more, further preferably 9% by mole or more, especially preferably 10% by mole or more, most preferably 12% by mole or more. From the viewpoint of still further enhancing the sound insulating property, the absolute value of difference between the content of the hydroxyl group of the polyvinyl acetal resin (1) and the content of the hydroxyl group of the polyvinyl acetal resin (3) is preferably 1% by mole or more, more preferably 5% by mole or more, further preferably 9% by mole or more, especially preferably 10% by mole or more, most preferably 12% by mole or more. An absolute value of difference between the content of the hydroxyl group of the polyvinyl acetal resin (1) and the content of the hydroxyl group of the polyvinyl acetal resin (2) is preferably 20% by mole or less. An absolute value of difference between the content of the hydroxyl group of the polyvinyl acetal resin (1) and the content of the hydroxyl group of the polyvinyl acetal resin (3) is preferably 20% by mole or less.

The content of the hydroxyl group of the polyvinyl acetal resin is a mole fraction, represented in percentage, obtained by dividing the amount of ethylene groups to which the hydroxyl group is bonded by the total amount of ethylene groups in the main chain. For example, the amount of ethylene groups to which the hydroxyl group is bonded can be measured in accordance with JIS K6728 "Testing methods for polyvinyl butyral".

The acetylation degree (the amount of acetyl groups) of the polyvinyl acetal resin (0) is preferably 0.1% by mole or more, more preferably 0.3% by mole or more, further preferably 0.5% by mole or more and is preferably 30% by mole or less, more preferably 25% by mole or less, and further preferably 20% by mole or less. When the acetylation degree is the above lower limit or more, the compatibility between the polyvinyl acetal resin and a plasticizer is enhanced. When the acetylation degree is the above upper limit or less, the moisture resistance of the colored interlayer film and laminated glass is enhanced.

The acetylation degree (the amount of acetyl groups) of the polyvinyl acetal resin (1) is preferably 0.01% by mole or more, more preferably 0.1% by mole or more, even more preferably 7% by mole or more, further preferably 9% by mole or more and is preferably 30% by mole or less, more preferably 25% by mole or less, further preferably 24% by mole or less, especially preferably 20% by mole or less. When the acetylation degree is the above lower limit or more, the compatibility between the polyvinyl acetal resin and a plasticizer is enhanced. When the acetylation degree is the above upper limit or less, the moisture resistance of the colored interlayer film and laminated glass is enhanced. In particular, when the acetylation degree of the polyvinyl acetal resin (1) is 0.1% by mole or more and is 25% by mole or less, the resulting laminated glass is excellent in penetration resistance.

The acetylation degree of each of the polyvinyl acetal resin (2) and the polyvinyl acetal resin (3) is preferably 0.01% by mole or more, more preferably 0.5% by mole or more and is preferably 10% by mole or less, more preferably 2% by mole or less. When the acetylation degree is the above lower limit or more, the compatibility between the polyvinyl acetal resin and a plasticizer is enhanced. When the acetylation degree is the above upper limit or less, the moisture resistance of the colored interlayer film and laminated glass is enhanced.

The acetylation degree is a mole fraction, represented in percentage, obtained by dividing the amount of ethylene groups to which the acetyl group is bonded by the total amount of ethylene groups in the main chain. For example, the amount of ethylene groups to which the acetyl group is bonded can be determined in accordance with JIS K6728 "Testing methods for polyvinyl butyral".

The acetalization degree of the polyvinyl acetal resin (0) (the butyralization degree in the case of a polyvinyl butyral resin) is preferably 60% by mole or more, more preferably 63% by mole or more and is preferably 85% by mole or less, more preferably 75% by mole or less, further preferably 70% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of the polyvinyl acetal resin (1) (the butyralization degree in the case of a polyvinyl butyral resin) is preferably 47% by mole or more, more preferably 60% by mole or more, and is preferably 85% by mole or less, more preferably 80% by mole or less, further preferably 75% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree of each of the polyvinyl acetal resin (2) and the polyvinyl acetal resin (3) (the butyralization degree in the case of a polyvinyl butyral resin) is preferably 55% by mole or more, more preferably 60% by mole or more and is preferably 75% by mole or less, more preferably 71% by mole or less. When the acetalization degree is the above lower limit or more, the compatibility between the polyvinyl acetal resin and a plasticizer is enhanced. When the acetalization degree is the above upper limit or less, the reaction time required for producing the polyvinyl acetal resin is shortened.

The acetalization degree is determined in the following manner. From the total amount of the ethylene group in the main chain, the amount of the ethylene group to which the hydroxyl group is bonded and the amount of the ethylene group to which the acetyl group is bonded are subtracted. The obtained value is divided by the total amount of the ethylene group in the main chain to obtain a mole fraction. The mole fraction represented in percentage is the acetalization degree.

In this connection, it is preferred that the content of the hydroxyl group (the amount of hydroxyl groups), the acetalization degree (the butyralization degree) and the acetylation degree be calculated from the results determined by a method conforming to JIS K6728 "Testing methods for polyvinyl butyral". In this context, a method in accordance with ASTM D1396-92 may be used. When the polyvinyl acetal resin is a polyvinyl butyral resin, the content of the hydroxyl group (the amount of hydroxyl groups), the acetalization degree (the butyralization degree) and the acetylation degree can be calculated from the results measured by a method conforming to JIS K6728 "Testing methods for polyvinyl butyral".

In 100% by weight of the thermoplastic resin contained in the colored interlayer film, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the colored interlayer film, the content of the polyvinyl acetal resin is preferably 100% by weight or less. It is preferred that the main ingredient (50% by weight or more) of the thermoplastic resin of the colored interlayer film be a polyvinyl acetal resin.

In 100% by weight of the thermoplastic resin contained in the first layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the first layer, the content of the polyvinyl acetal resin is preferably 100% by weight or less. It is preferred that the main ingredient (50% by weight or more) of the thermoplastic resin of the first layer be a polyvinyl acetal resin.

In 100% by weight of the thermoplastic resin contained in the second layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the second layer, the content of the polyvinyl acetal resin is preferably 100% by weight or less. It is preferred that the main ingredient (50% by weight or more) of the thermoplastic resin of the second layer be a polyvinyl acetal resin.

In 100% by weight of the thermoplastic resin contained in the third layer, the content of the polyvinyl acetal resin is preferably 10% by weight or more, more preferably 30% by weight or more, still more preferably 50% by weight or more, further preferably 70% by weight or more, especially preferably 80% by weight or more, most preferably 90% by weight or more. In 100% by weight of the thermoplastic resin contained in the third layer, the content of the polyvinyl acetal resin is preferably 100% by weight or less. It is preferred that the main ingredient (50% by weight or more) of the thermoplastic resin of the third layer be a polyvinyl acetal resin.

### <Plasticizer>

From the viewpoint of further enhancing the adhesive strength of a colored interlayer film, it is preferred that the colored interlayer film contain a plasticizer (hereinafter, sometimes described as a plasticizer (0)). It is preferred that the first layer contain a plasticizer (hereinafter, sometimes described as a plasticizer (1)). It is preferred that the second layer contain a plasticizer (hereinafter, sometimes described as a plasticizer (2)). It is preferred that the third layer contain a plasticizer (hereinafter, sometimes described as a plasticizer (3)). When the thermoplastic resin contained in the colored interlayer film is a polyvinyl acetal resin, it is especially preferred that the colored interlayer film (the respective layers) contain a plasticizer. It is preferred that a layer containing a polyvinyl acetal resin contain a plasticizer.

The plasticizer is not particularly limited. As the plasticizer, a conventionally known plasticizer can be used. One kind of the plasticizer may be used alone and two or more kinds thereof may be used in combination.

Examples of the plasticizer include organic ester plasticizers such as a monobasic organic acid ester and a polybasic organic acid ester, organic phosphate plasticizers and organic phosphite plasticizers, and the like. It is preferred that the plasticizer be an organic ester plasticizer. It is preferred that the plasticizer be a liquid plasticizer.

Examples of the monobasic organic acid ester include a glycol ester obtained by the reaction of a glycol with a monobasic organic acid, and the like. Examples of the glycol include triethylene glycol, tetraethylene glycol, tripropylene glycol, and the like. Examples of the monobasic organic acid include butyric acid, isobutyric acid, caproic acid, 2-ethylbutyric acid, heptanoic acid, n-octylic acid, 2-ethylhexanoic acid, n-nonylic acid, decylic acid, benzoic acid and the like.

Examples of the polybasic organic acid ester include an ester compound of a polybasic organic acid and an alcohol having a linear or branched structure of 4 to 8 carbon atoms, and the like. Examples of the polybasic organic acid include adipic acid, sebacic acid, azelaic acid, and the like.

Examples of the organic ester plasticizer include triethylene glycol di-2-ethylpropanoate, triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, diethylene glycol dibenzoate, dipropylene glycol dibenzoate, dihexyl adipate, dioctyl adipate, hexyl cyclohexyl adipate, a mixture of heptyl adipate and nonyl adipate, diisononyl adipate, diisodecyl adipate, heptyl nonyl adipate, dibutyl sebacate, oil-modified sebacic alkyds, a mixture of a phosphoric acid ester and an adipic acid ester, and the like. As the organic ester plasticizer, other organic ester plasticizer than those recited above may be used. As the adipic acid ester, adipic acid esters other than the aforementioned adipic acid esters may be used.

Examples of the organic phosphate plasticizer include tributoxyethyl phosphate, isodecyl phenyl phosphate, triisopropyl phosphate, and the like.

It is preferred that the plasticizer be a diester plasticizer represented by the following formula (1).

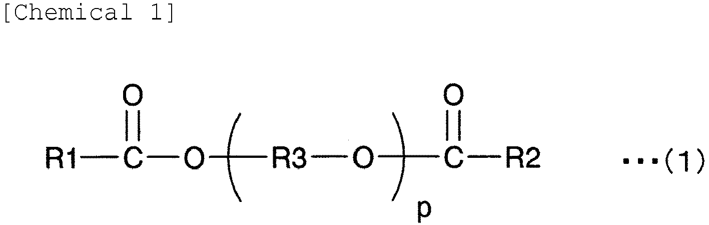

In the formula (1), R1 and R2 each represent an organic group with 2 to 10 carbon atoms, R3 represents an ethylene group, an isopropylene group, or an n-propylene group, and p represents an integer of 3 to 10. R1 and R2 in the formula (1) each are preferably an organic group with 5 to 10 carbon atoms, and more preferably an organic group with 6 to 10 carbon atoms.

It is preferred that the plasticizer include triethylene glycol di-2-ethylhexanoate (3GO), triethylene glycol di-2-ethylbutyrate (3GH) or triethylene glycol di-2-ethylpropanoate. It is more preferred that the plasticizer include triethylene glycol di-2-ethylhexanoate (3GO) or triethylene glycol di-2-ethylbutyrate (3GH), and it is further preferred that the plasticizer include triethylene glycol di-2-ethylhexanoate (3GO).

In the colored interlayer film, the content of the plasticizer (0) per 100 parts by weight of the thermoplastic resin (0) is defined as content (0). The content (0) is preferably 5 parts by weight or more, more preferably 25 parts by weight or more, further preferably 30 parts by weight or more, and is preferably 100 parts by weight or less, more preferably 60 parts by weight or less, further preferably 50 parts by weight or less. When the content (0) is the above lower limit or more, the penetration resistance of the laminated glass is further enhanced. When the content (0) is the above upper limit or less, the transparency of the colored interlayer film is further enhanced.

In the first layer, the content of the plasticizer (1) relative to 100 parts by weight of the thermoplastic resin (1) is referred to as content (1). The content (1) is preferably 50 parts by weight or more, more preferably 55 parts by weight or more, further preferably 60 parts by weight or more. The content (1) is preferably 100 parts by weight or less, more preferably 90 parts by weight or less, further preferably 85 parts by weight or less, especially preferably 80 parts by weight or less. When the content (1) is the above lower limit or more, the flexibility of the colored interlayer film is enhanced and the handling of the colored interlayer film is facilitated. When the content (1) is the above upper limit or less, the penetration resistance of laminated glass is further enhanced.

In the second layer, the content of the plasticizer (2) per 100 parts by weight of the thermoplastic resin (2) is defined as a content (2). In the third layer, the content of the plasticizer (3) relative to 100 parts by weight of the thermoplastic resin (3) is defined as content (3). Each of the content (2) and the content (3) is preferably 5 parts by weight or more, more preferably 10 parts by weight or more, still more preferably 15 parts by weight or more, further preferably 20 parts by weight or more, especially preferably 24 parts by weight or more, and most preferably 25 parts by weight or more. Each of the content (2) and the content (3) is preferably 45 parts by weight or less, more preferably 40 parts by weight or less, further preferably 35 parts by weight or less, especially preferably 32 parts by weight or less, and most preferably 30 parts by weight or less. When the content (2) and the content (3) are the above lower limit or more, the flexibility of the colored interlayer film is enhanced and the handling of the colored interlayer film is facilitated. When the content (2) and the content (3) are the above upper limit or less, the penetration resistance of the laminated glass is further enhanced.

For the purpose of enhancing the sound insulating property of the laminated glass, it is preferred that the content (1) be larger than the content (2) and it is preferred that the content (1) be larger than the content (3).

From the viewpoint of further enhancing the sound insulating property of the laminated glass, each of the absolute value of difference between the content (2) and the content (1) and the absolute value of difference between the content (3) and the content (1) is preferably 10 parts by weight or more, more preferably 15 parts by weight or more, and further preferably 20 parts by weight or more. Each of the absolute value of difference between the content (2) and the content (1) and the absolute value of difference between the content (3) and the content (1) is preferably 80 parts by weight or less, more preferably 75 parts by weight or less, further preferably 70 parts by weight or less.

### <Metal salt>

It is preferred that the colored interlayer film contain at least one kind of metal salt (hereinafter, sometimes described as Metal salt M) of alkali metal salts and alkali earth metal salts. It is preferred that the first layer contain the Metal salt M. It is preferred that the second layer contain the Metal salt M. It is preferred that the third layer contain the Metal salt M. The alkali earth metal means six metals of Be, Mg, Ca, Sr, Ba, and Ra. By the use of the Metal salt M, controlling the adhesivity between the colored interlayer film and a lamination glass member or the adhesivity between respective layers in the colored interlayer film is facilitated. One kind of the Metal salt M may be used alone, and two or more kinds thereof may be used in combination.

It is preferred that the Metal salt M contain at least one kind of metal selected from the group consisting of Li, Na, K, Rb, Cs, Mg, Ca, Sr and Ba. It is preferred that the metal salt M included in the colored interlayer film contain at least one kind of metal among K and Mg.

As the metal salt M, an alkali metal salt of an organic acid having 2 to 16 carbon atoms, and an alkali earth metal salt of an organic acid having 2 to 16 carbon atoms can be used. The metal salt M may include a magnesium carboxylate having 2 to 16 carbon atoms, or a potassium carboxylate having 2 to 16 carbon atoms.

Examples of the magnesium carboxylate with 2 to 16 carbon atoms and the potassium carboxylate with 2 to 16 carbon atoms include magnesium acetate, potassium acetate, magnesium propionate, potassium propionate, magnesium 2-ethylbutyrate, potassium 2-ethylbutanoate, magnesium 2-ethylhexanoate, potassium 2-ethylhexanoate, and the like.

The total of the content of Mg and the content of K in the colored interlayer film containing the Metal salt M or a layer containing the Metal salt M (first layer, second layer, or third layer) is preferably 5 ppm or more, more preferably 10 ppm or more, further preferably 20 ppm or more, and is preferably 300 ppm or less, more preferably 250 ppm or less, further preferably 200 ppm or less. When the total of the content of Mg and the content of K is the above lower limit or more and the above upper limit or less, the adhesivity between the colored interlayer film and a glass plate or the adhesivity between respective layers in the colored interlayer film can be further well controlled.

### <Ultraviolet ray screening agent>

It is preferred that the colored interlayer film contain an ultraviolet ray screening agent. It is preferred that the first layer contain an ultraviolet ray screening agent. It is preferred that the second layer contain an ultraviolet ray screening agent. It is preferred that the third layer contain an ultraviolet ray screening agent. By the use of an ultraviolet ray screening agent, the visible light transmittance becomes still less likely to decrease even when the colored interlayer film and the laminated glass are used for a long period. One kind of the ultraviolet ray screening agent may be used alone, and two or more kinds thereof may be used in combination.

Examples of the ultraviolet ray screening agent include an ultraviolet ray absorber. It is preferred that the ultraviolet ray screening agent be an ultraviolet ray absorber.

Examples of the ultraviolet ray screening agent include an ultraviolet ray screening agent containing a metal atom, an ultraviolet ray screening agent containing a metal oxide, an ultraviolet ray screening agent having a benzotriazole structure (a benzotriazole compound), an ultraviolet ray screening agent having a benzophenone structure (a benzophenone compound), an ultraviolet ray screening agent having a triazine structure (a triazine compound), an ultraviolet ray screening agent having a malonic acid ester structure (a malonic acid ester compound), an ultraviolet ray screening agent having an oxanilide structure (an oxanilide compound), an ultraviolet ray screening agent having a benzoate structure (a benzoate compound), and the like.

Examples of the ultraviolet ray screening agent containing a metal atom include platinum particles, particles in which the surface of platinum particles is coated with silica, palladium particles, particles in which the surface of palladium particles is coated with silica, and the like. It is preferred that the ultraviolet ray screening agent not be heat shielding particles.

The ultraviolet ray screening agent is preferably an ultraviolet ray screening agent having a benzotriazole structure, an ultraviolet ray screening agent having a benzophenone structure, an ultraviolet ray screening agent having a triazine structure, or an ultraviolet ray screening agent having a benzoate structure. The ultraviolet ray screening agent is more preferably an ultraviolet ray screening agent having a benzotriazole structure or an ultraviolet ray screening agent having a benzophenone structure, and is further preferably an ultraviolet ray screening agent having a benzotriazole structure.

Examples of the ultraviolet ray screening agent containing a metal oxide include zinc oxide, titanium oxide, cerium oxide, and the like. Furthermore, with regard to the ultraviolet ray screening agent containing a metal oxide, the surface may be coated. Examples of the coating material for the surface of the ultraviolet ray screening agent containing a metal oxide include an insulating metal oxide, a hydrolyzable organosilicon compound, a silicone compound, and the like.

Examples of the insulating metal oxide include silica, alumina, zirconia, and the like. For example, the insulating metal oxide has a band-gap energy of 5.0 eV or more.

Examples of the ultraviolet ray screening agent having a benzotriazole structure include 2-(2'-hydroxy-5'-methylphenyl)benzotriazole ("Tinuvin P" available from BASF Japan Ltd.), 2-(2'-hydroxy-3',5'-di-t-butylphenyl)benzotriazole ("Tinuvin 320" available from BASF Japan Ltd.), 2-(2'-hydroxy-3'-t-butyl-5-methylphenyl)-5-chlorobenzotriazole ("Tinuvin 326" available from BASF Japan Ltd.), 2-(2'-hydroxy-3',5'-diamylphenyl)benzotriazole ("Tinuvin 328" available from BASF Japan Ltd.), and the like. It is preferred that the ultraviolet ray screening agent be an ultraviolet ray screening agent having a benzotriazole structure containing a halogen atom, and it is more preferred that the ultraviolet ray screening agent be an ultraviolet ray screening agent having a benzotriazole structure containing a chlorine atom, because those are excellent in ultraviolet ray screening performance.

Examples of the ultraviolet ray screening agent having a benzophenone structure include octabenzone ("Chimassorb 81" available from BASF Japan Ltd.), and the like.

Examples of the ultraviolet ray screening agent having a triazine structure include "LA-F70" available from ADEKA CORPORATION, 2-(4,6-diphenyl-1,3,5-triazine-2-yl)-5-[(hexyl)oxy]-phenol ("Tinuvin 1577FF" available from BASF Japan Ltd.), and the like.

Examples of the ultraviolet ray screening agent having a malonic acid ester structure include dimethyl 2-(p-methoxybenzylidene)malonate, tetraethyl-2,2-(1,4-phenylenedimethylidene)bismalonate, 2-(p-methoxybenzylidene)-bis(1,2,2,6,6-pentamethyl-4-piperidinyl)malonate, and the like.

Examples of a commercial product of the ultraviolet ray screening agent having a malonic acid ester structure include Hostavin B-CAP, Hostavin PR-25 and Hostavin PR-31 (any of these is available from Clariant Japan K.K.).

Examples of the ultraviolet ray screening agent having an oxanilide structure include a kind of oxalic acid diamide having a substituted aryl group and the like on the nitrogen atom such as N-(2-ethylphenyl)-N'-(2-ethoxy-5-t-butylphenyl)oxalic acid diamide, N-(2-ethylphenyl)-N'-(2-ethoxy-phenyl)oxalic acid diamide and 2-ethyl-2'-ethoxy-oxalanilide ("Sanduvor VSU" available from Clariant Japan K.K.).

Examples of the ultraviolet ray screening agent having a benzoate structure include 2,4-di-tert-butylphenyl-3,5-di-tert-butyl-4-hydroxybenzoate ("Tinuvin 120" available from BASF Japan Ltd.), and the like.

In 100% by weight of the colored interlayer film or in 100% by weight of a layer containing the ultraviolet ray screening agent (first layer, second layer, or third layer), the content of the ultraviolet ray screening agent and the content of the benzotriazole compound are preferably 0.1% by weight or more, more preferably 0.2% by weight or more, further preferably 0.3% by weight or more, especially preferably 0.5% by weight or more. In this case, decrease in visible light transmittance after a lapse of the term is further suppressed. In 100% by weight of the colored interlayer film or in 100% by weight of a layer containing the ultraviolet ray screening agent (first layer, second layer, or third layer), the content of the ultraviolet ray screening agent and the content of the benzotriazole compound are preferably 2.5% by weight or less, more preferably 2% by weight or less, further preferably 1% by weight or less, especially preferably 0.8% by weight or less. In particular, by setting the content of the ultraviolet ray screening agent to be 0.2% by weight or more in 100% by weight of a layer containing the ultraviolet ray screening agent, with regard to the colored interlayer film and laminated glass, the lowering in visible light transmittance thereof after the lapse of a certain period of time can be significantly suppressed.

### <Oxidation inhibitor>

It is preferred that the colored interlayer film contain an oxidation inhibitor. It is preferred that the first layer contain an oxidation inhibitor. It is preferred that the second layer contain an oxidation inhibitor. It is preferred that the third layer contain an oxidation inhibitor. One kind of the oxidation inhibitor may be used alone, and two or more kinds thereof may be used in combination.

Examples of the oxidation inhibitor include a phenol-based oxidation inhibitor, a sulfur-based oxidation inhibitor, a phosphorus-based oxidation inhibitor, and the like. The phenol-based oxidation inhibitor is an oxidation inhibitor having a phenol skeleton. The sulfur-based oxidation inhibitor is an oxidation inhibitor containing a sulfur atom. The phosphorus-based oxidation inhibitor is an oxidation inhibitor containing a phosphorus atom.

It is preferred that the oxidation inhibitor be a phenol-based oxidation inhibitor or a phosphorus-based oxidation inhibitor.

Examples of the phenol-based oxidation inhibitor include 2,6-di-t-butyl-p-cresol (BHT), butyl hydroxyanisole (BHA), 2,6-di-t-butyl-4-ethylphenol, stearyl β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, bis(3,3'-t-butylphenol)butyric acid glycol ester, and bis(3-t-butyl-4-hydroxy-5-methylbenzenepropanoic acid)ethylenebis(oxyethylene), and the like. One kind or two or more kinds among these oxidation inhibitors are suitably used.

Examples of the phosphorus-based oxidation inhibitor include tridecyl phosphite, tris(tridecyl) phosphite, triphenyl phosphite, trinonylphenyl phosphite, bis(tridecyl)pentaerithritol diphosphite, bis(decyl)pentaerithritol diphosphite, tris(2,4-dit-butylphenyl) phosphite, bis(2,4-di-t-butyl-6-methylphenyl)ethyl ester phosphorous acid, 2,2'-methylenebis(4,6-di-t-butyl-1-phenyloxy)(2-ethylhexyloxy)phosphorus, and the like. One kind or two or more kinds among these oxidation inhibitors are suitably used.

Examples of a commercial product of the oxidation inhibitor include "IRGANOX 245" available from BASF Japan Ltd., "IRGAFOS 168" available from BASF Japan Ltd., "IRGAFOS 38" available from BASF Japan Ltd., "Sumilizer BHT" available from Sumitomo Chemical Co., Ltd., "H-BHT" available from Sakai Chemical Industry Co., Ltd., "IRGANOX 1010" available from BASF Japan Ltd., and the like.

With regard to the colored interlayer film and laminated glass, in order to maintain high visible light transmittance thereof over a long period of time, the content of the oxidation inhibitor is preferably 0.03% by weight or more, more preferably 0.1% by weight or more in 100% by weight of the colored interlayer film or in 100% by weight of the layer containing the oxidation inhibitor (first layer, second layer, or third layer). Moreover, since an effect commensurate with the addition of an oxidation inhibitor is not attained, it is preferred that the content of the oxidation inhibitor be 2% by weight or less in 100% by weight of the colored interlayer film or in 100% by weight of a layer containing the oxidation inhibitor (first layer, second layer or third layer).

### <Other ingredients>

Each of the colored interlayer film, the first layer, the second layer, and the third layer may contain additives such as heat shielding particles, a light stabilizer, a coupling agent, a dispersing agent, a surfactant, a flame retardant, an antistatic agent, an adhesive force adjusting agent other than metal salt, a moisture-resistance agent, a fluorescent brightening agent, and an infrared ray absorber, as necessary. One kind of these additives may be used alone, and two or more kinds thereof may be used in combination.

### Heat shielding particles:

The colored interlayer film may contain heat shielding particles. The first layer may contain heat shielding particles. The second layer may contain heat shielding particles. The third layer may contain heat shielding particles. It is preferred that at least one layer of the colored interlayer film contain heat shielding particles. The energy amount of an infrared ray with a wavelength of 780 nm or longer which is longer than that of visible light is small as compared with an ultraviolet ray. However, the thermal action of infrared rays is large, and when infrared rays are absorbed into a substance, heat is released from the substance. Accordingly, infrared rays are generally called heat rays. By the use of the heat shielding particles, infrared rays (heat rays) can be effectively cut off. In this connection, the heat shielding particle means a particle capable of absorbing infrared rays. Since the colored interlayer film contains heat shielding particles, it is possible to improve the heat shielding property and the appearance designability of the laminated glass.

Specific examples of the heat shielding particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, tungsten oxide particles, tin-doped indium oxide particles (ITO particles), tin-doped zinc oxide particles and silicon-doped zinc oxide particles, lanthanum hexaboride (LaB₆), and the like. Heat shielding particles other than these may be used. Examples of the tungsten oxide particles include sodium-doped tungsten oxide particles, cesium-doped tungsten oxide particles (CWO particles), thallium-doped tungsten oxide particles, and rubidium-doped tungsten oxide particles, and the like. One kind of the heat shielding particles may be used alone, and two or more kinds thereof may be used in combination.

From the viewpoint of effectively enhancing the heat shielding property, it is preferred that the heat shielding particles include tungsten oxide particles or tin-doped indium oxide particles (ITO particles), and it is more preferred that the heat shielding particles include cesium-doped tungsten oxide particles (CWO particles) or tin-doped indium oxide particles (ITO particles). The heat shielding particles may include tungsten oxide particles, may include cesium-doped tungsten oxide particles, and may include tin-doped indium oxide particles (ITO particles). From the viewpoint of effectively enhancing the heat shielding property, it is preferred that the heat shielding particles include tungsten oxide particles and tin-doped indium oxide particles (ITO particles), and it is more preferred that the heat shielding particles include cesium-doped tungsten oxide particles (CWO particles) and tin-doped indium oxide particles (ITO particles).

The average particle diameter of the heat shielding particles is preferably 10 nm or more, more preferably 20 nm or more, and is preferably 100 nm or less, more preferably 80 nm or less, further preferably 50 nm or less. When the average particle diameter is the above lower limit or more, it is possible to sufficiently enhance the heat ray shielding property. When the average particle diameter is the above upper limit or less, the dispersibility of heat shielding particles is enhanced.

The "average particle diameter" refers to the volume average particle diameter. The average particle diameter can be measured using a particle size distribution measuring apparatus ("UPA-EX150" available from NIKKISO CO., LTD.), or the like.

In 100% by weight of the interlayer film or in 100% by weight of a layer containing the heat shielding particles (first layer, second layer, or third layer), the content of the heat shielding particles is preferably 0.01% by weight or more, more preferably 0.1% by weight or more, further preferably 1% by weight or more, especially preferably 1.5% by weight or more. In 100% by weight of the interlayer film, or in 100% by weight of a layer containing the heat shielding particles (first layer, second layer, or third layer), the content of the heat shielding particles is preferably 6% by weight or less, more preferably 5.5% by weight or less, further preferably 4% by weight or less, especially preferably 3.5% by weight or less, most preferably 3% by weight or less. When the content of the heat shielding particles is the above lower limit or more and the above upper limit or less, the heat shielding property is sufficiently enhanced and the visible light transmittance is sufficiently enhanced.

### Light stabilizer:

The colored interlayer film may contain a light stabilizer. The first layer may contain a light stabilizer. The second layer may contain a light stabilizer. The third layer may contain a light stabilizer. It is preferred that at least one layer of the colored interlayer film contain a light stabilizer. By using the light stabilizer, discoloration is further suppressed and the visible light transmittance is less likely to lower even when the interlayer film is used over a long term or exposed to sunlight. One kind of the light stabilizer may be used alone and two or more kinds thereof may be used in combination.

Examples of the light stabilizer include hindered amine light stabilizers in which a carbon atom, an alkoxy group, or a hydrogen atom is bonded to a nitrogen atom of a piperidine structure.

In a hindered amine light stabilizer in which a carbon atom is bounded to a nitrogen atom of a piperidine structure, it is preferred that a hydrocarbon group be bounded to the nitrogen atom of the piperidine structure. Examples of the hydrocarbon group include an alkyl group and an alkylene group, and the like.

Examples of the hindered amine light stabilizer in which a carbon atom is bonded to a nitrogen atom of a piperidine structure include "Tinuvin 765" and "Tinuvin 622SF" available from BASF Japan Ltd., and "ADK STAB LA-52" available from ADEKA, and the like.

As the hindered amine light stabilizer in which an alkoxy group is bonded to a nitrogen atom of the piperidine structure, "Tinuvin XT-850FF" and "Tinuvin XT-855FF" available from BASF, and "ADK STAB LA-81" available from ADEKA, or the like can be recited.

Examples of the hindered amine light stabilizer in which a hydrogen atom is bonded to a nitrogen atom of a piperidine structure include "Tinuvin 770DF" available from BASF Japan Ltd., and "Hostavin N24" available from Clariant, and the like.

From the viewpoint of further suppressing the discoloration, the light stabilizer has a molecular weight of preferably 2000 or less, more preferably 1000 or less, further preferably 700 or less.

<Combination with other functional film>

The colored interlayer film may include other functional film for the purpose of realizing other function. Examples of the functional film include an infrared reflective film, and a film with design printing, and the like. For example, in order to enhance the heat shielding property, the colored interlayer film may include an infrared reflective film. For example, in order to further improve the designability, or combine with other pattern, the colored interlayer film may include a film with design printing.

The functional film may be arranged between the first layer and the second layer and may be arranged between the first layer and the third layer.

Examples of the infrared reflective film include a resin film with metal foil, a multilayer laminate film in which a metal layer and a dielectric layer are formed on a resin film, a multilayer resin film, and a liquid crystal film, and the like. These films have the property of reflecting infrared rays.

The resin film with metal foil includes a resin film, and a metal foil layered on the outer surface of the resin film. Examples of the material of the resin film include a polyethylene terephthalate resin, a polyethylene naphthalate resin, a polyvinyl acetal resin, an ethylene-vinyl acetate copolymer resin, an ethylene-acrylic acid copolymer resin, a polyurethane resin, a polyvinyl alcohol resin, a polyolefin resin, a polyvinyl chloride resin, and a polyimide resin. Examples of the material of the metal foil include aluminum, copper, silver, gold, palladium, and alloys containing these metals.

The multilayer laminate film in which a metal layer and a dielectric layer are formed on a resin film is a multilayer laminate film in which any number of layers of the metal layer and the dielectric layer are alternately layered on the resin film. In the multilayer laminate film in which a metal layer and a dielectric layer are formed on a resin layer, it is preferred that all of the metal layers and the dielectric layers be layered alternately, however, there may be a structural part in which a metal layer and a dielectric layer are not layered alternately as exemplified by metal layer/dielectric layer/metal layer/dielectric layer/metal layer/metal layer/dielectric layer/metal layer.

Examples of the material of the resin film in the multilayer laminate film include polyethylene, polypropylene, polylactic acid, poly(4-methylpentene-1), polyvinylidene fluoride, cyclic polyolefin, polymethyl methacrylate, polyvinyl chloride, polyvinyl alcohol, polyamide such as nylon 6, 11, 12, 66 and the like, polystyrene, polycarbonate, polyethylene terephthalate, polyethylene naphthalate, polyester, polyphenylene sulfide, and polyether imide. As the material of the metal layer in the multilayer laminate film, those exemplified as the material of the metal foil in the resin film with metal foil can be exemplified. A coating layer of metal or a mixed oxide of metal can be given to both faces or either face of the metal layer. Examples of the material of the coating layer include ZnO, Al₂O₃, Ga₂O₃, InO₃, MgO, Ti, NiCr and Cu. Also, examples of the dielectric layer in the multilayer laminate film include indium oxide.

The multilayer resin film is a laminate film in which a plurality of resin films are layered. As the material of the multilayer resin film, those exemplified as the material of the resin film in the multilayer laminate film can be exemplified. The number of layered resin films in the multilayer resin film is 2 or more, and may be 3 or more, and may be 5 or more. The number of layered resin films in the multilayer resin film may be 1000 or less, and may be 100 or less, and may be 50 or less.

The multilayer resin film may be a multilayer resin film in which any number of layers of two or more kinds of thermoplastic resin films having different optical properties (refractive index) are layered alternately or randomly. Such a multilayer resin film is so configured that a desired infrared reflecting property is obtained.

As the liquid crystal film, a film in which any number of layers of cholesteric liquid crystal layers that reflect the light of any wavelength are layered can be recited. Such a liquid crystal film is so configured that desired infrared reflecting property is obtained.

The infrared reflective film may contain infrared reflective particles. The infrared reflective particles are particles having the infrared reflecting property, and for example, tabular particles having a thickness of 1 nm or more and 1000 µm or less can be recited. For example, in the resin film in which silver nano tabular particles are dispersed, an infrared reflective film having infrared reflecting property is obtained by adjusting the thickness, the surface area and the arrangement state of the silver nano tabular particles.

### <Other details of colored interlayer film>

The colored interlayer film has one end and the other end being at an opposite side of the one end. The one end and the other end are end parts of both sides facing each other in the colored interlayer film. The colored interlayer film may be an interlayer film in which the thickness of the one end and the thickness of the other end are the same, or may be an interlayer film in which the thickness of the other end is larger than the thickness of the one end.

The colored interlayer film may have a gradation pattern in plan view. The colored interlayer film in which the thickness of the other end is larger than the thickness of the one end can have a gradation pattern caused by the difference in thickness when the concentration of the pigment or the like in the interlayer film is uniform. Also, the colored interlayer film in which the thickness of the one end is the same as the thickness of the other end can have a gradation pattern caused by difference in concentration of a pigment or the like by providing the concentration of the pigment or the like in the interlayer film with a gradation. In the present invention, even when the colored interlayer film having a gradation pattern in plan view as described above is used, it is possible to effectively exert the effect of the present invention.

The method for producing the colored interlayer film is not particularly limited.

For the reason of excellent production efficiency of the colored interlayer film, it is preferred that the second layer and the third layer contain the same polyvinyl acetal resin. For the reason of excellent production efficiency of the colored interlayer film, it is more preferred that the second layer and the third layer contain the same polyvinyl acetal resin and the same plasticizer. For the reason of excellent production efficiency of the colored interlayer film, it is further preferred that the second layer and the third layer be formed of the same resin composition.

The maximum thickness of the colored interlayer film is preferably 0.1 mm or more, more preferably 0.25 mm or more, further preferably 0.5 mm or more, especially preferably 0.8 mm or more and is preferably 3.8 mm or less, more preferably 2 mm or less, further preferably 1.5 mm or less.

From the viewpoint of the practical aspect and the viewpoint of sufficiently enhancing the adhesive force and the penetration resistance, the maximum thickness of a surface layer of the colored interlayer film is preferably 0.001 mm or more, more preferably 0.2 mm or more, further preferably 0.3 mm or more, and is preferably 1 mm or less, and more preferably 0.8 mm or less.

From the viewpoint of the practical aspect and the viewpoint of sufficiently enhancing the penetration resistance, the maximum thickness of a layer (intermediate layer) arranged between two surface layers of the colored interlayer film is preferably 0.001 mm or more, more preferably 0.1 mm or more, further preferably 0.2 mm or more and is preferably 0.8 mm or less, more preferably 0.6 mm or less, further preferably 0.3 mm or less.

### (Other details of laminated glass)

The laminated glass has one end and the other end being at the opposite side of the one end. The one end and the other end are end parts of both sides facing each other in the laminated glass. The laminated glass may be a laminated glass in which the thickness of the one end and the thickness of the other end are the same, or may be a laminated glass in which the thickness of the other end is larger than the thickness of the one end.

The laminated glass can be used for automobiles, railway vehicles, aircraft, ships, buildings, and the like. The laminated glass can also be used for applications other than these applications. It is preferred that the laminated glass be laminated glass for vehicles or for buildings and it is more preferred that the laminated glass be laminated glass for vehicles. The laminated glass can be used for a windshield, side glass, rear glass, roof glass or glass for backlight of an automobile, and the like. The laminated glass is suitably used for automobiles.

The method for producing the laminated glass is not particularly limited. The laminated glass can be produced, for example, in the following manner. First, the colored interlayer film is sandwiched between the first lamination glass member and the second lamination glass member to obtain a laminate. Then, for example, by passing the obtained laminate through pressure rolls or subjecting the obtained laminate to decompression suction in a rubber bag, the air remaining between the first and the second lamination glass members and the colored interlayer film is removed. Then, the laminate is preliminarily bonded together at about 70°C to 110°C to obtain a preliminarily press-bonded laminate. Next, by putting the preliminarily press-bonded laminate into an autoclave or by pressing the laminate, the laminate is press-bonded at about 120°C to 150°C and under a pressure of 1 MPa to 1.5 MPa. In this way, laminated glass can be obtained.

Hereinafter, the present invention will be described in more detail with reference to examples and comparative examples. The present invention is not limited only to these examples.

In polyvinyl acetal resins used, n-butyraldehyde that has 4 carbon atoms is used for the acetalization. With regard to the polyvinyl acetal resin, the acetalization degree (the butyralization degree), the acetylation degree and the content of the hydroxyl group were measured by a method conforming to JIS K6728 "Testing methods for polyvinyl butyral". In this connection, even in the cases of being measured according to ASTM D1396-92, numerical values similar to those obtained by a method conforming to JIS K6728 "Testing methods for polyvinyl butyral" were exhibited.

The following lamination glass members were prepared.

Green glass 1 (thickness 2.1 mm, length 100 cm × width 100 cm)
Green glass 2 (thickness 2.1 mm, length 100 cm × width 100 cm)
Green glass 3 (thickness 1.6 mm, length 100 cm × width 100 cm)
Green glass 4 (thickness 1.8 mm, length 100 cm × width 100 cm)
Green glass 5 (thickness 1.6 mm, length 100 cm × width 100 cm)
Green glass 6 (thickness 2.1 mm, length 100 cm × width 100 cm)
Green glass 7 (thickness 2.0 mm, length 100 cm × width 100 cm)
Green glass 8 (thickness 2.0 mm, length 100 cm × width 100 cm)
Green glass 9 (thickness 2.0 mm, length 100 cm × width 100 cm)
Green glass (thickness 2.5 mm, length 100 cm × width 100 cm)

Visible light transmittance (Tv), color coordinate a*, color coordinate b* and color coordinate L* in L*a*b* color system of Green glasses 1 to 9 are shown in the following Table 1. These values are values measured by the later-described evaluation methods.

**[Table 1]**

| | Tv (%) | L* | a* | b* | Thickness (mm) |
|---|---|---|---|---|---|
| Green glass 1 | 80.3 | 92.3 | -4.5 | 1.3 | 2.1 |
| Green glass 2 | 85.3 | 94.3 | -2.8 | 0.5 | 2.1 |
| Green glass 3 | 86.3 | 94.7 | -2.3 | 0.5 | 1.6 |
| Green glass 4 | 85.8 | 94.5 | -2.5 | 0.6 | 1.8 |
| Green glass 5 | 84.9 | 94.1 | -2.7 | 0.8 | 1.6 |
| Green glass 6 | 83.0 | 93.4 | -3.5 | 1.0 | 2.1 |
| Green glass 7 | 86.0 | 94.3 | -2.5 | 0.5 | 2.0 |
| Green glass 8 | 82.1 | 92.6 | -3.8 | 2.6 | 2.0 |
| Green glass 9 | 83.6 | 93.3 | -3.4 | 0.8 | 2.0 |

The following materials for interlayer film were prepared.

### (Thermoplastic resin)

Polyvinyl acetal resin 1 (PVB1, polyvinyl butyral resin in which n-butylaldehyde is used, average polymerization degree of 3000, content of hydroxyl group of 24% by mole, acetylation degree of 12% by mole, acetalization degree of 64% by mole).

Polyvinyl acetal resin 2 (PVB2, polyvinyl butyral resin in which n-butylaldehyde is used, average polymerization degree of 1700, content of hydroxyl group of 30% by mole, acetylation degree of 1% by mole, acetalization degree of 69% by mole).

### (Plasticizer)

Triethylene glycol di-2-ethylhexanoate (3GO)

### (Coloring agent (pigment))

Perylene compound (abbreviation: P.R.149, formal name: Pigment Red 149)
Phthalocyanine compound (abbreviation: P.B.15:1, formal name: Pigment Blue 15:1)
Phthalocyanine compound (abbreviation: P.B.15:3, formal name: Pigment Blue 15:3)
Carbon black (abbreviation: P.Bla.7, formal name: Pigment Black 7)
Nickel complex compound (abbreviation: P.Y.150, formal name: Pigment Yellow 150)
Quinacridone compound (abbreviation: P.R.209, formal name: Pigment Red 209)

### (Ultraviolet ray screening agent)

Tinuvin 326 (2-(2'-hydroxy-3'-t-butyl-5-methylphenyl)-5-chlorobenzotriazole, "Tinuvin 326" available from BASF Japan Ltd.)

### (Oxidation inhibitor)

BHT (2,6-di-t-butyl-p-cresol)

### (Heat shielding particles)

ITO particles (tin-doped indium oxide particles)
CWO particles (cesium-doped tungsten oxide particles)

### (Example 1)

### Preparation of resin composition for forming first layer:

The following ingredients were mixed, and kneaded sufficiently with a mixing roll to obtain a composition for forming a first layer.

PVB1: 100 parts by weight
3GO: 60 parts by weight
Tinuvin326: an amount which is to be 0.2% by weight in the obtained first layer
BHT: an amount which is to be 0.2% by weight in the obtained first layer

### Preparation of resin composition for forming second layer and third layer:

The following ingredients were mixed, and kneaded sufficiently with a mixing roll to obtain a resin composition for forming a second layer and a third layer.

PVB2: 100 parts by weight
3GO: 40 parts by weight
Perylene compound (P.R.149): an amount which is to be 0.0023% by weight in the obtained second layer and third layer.
Tinuvin 326: an amount which is to be 0.2% by weight in the obtained second layer and third layer
BHT: an amount which is to be 0.2% by weight in the obtained second layer and third layer

### Preparation of interlayer film:

By coextruding the resin composition for forming a first layer and the resin composition for forming a second layer and a third layer using a coextruder, an interlayer film (760 um in thickness) having a three-layer structure (second layer/first layer/third layer) was prepared.

### Preparation of laminated glass:

The obtained interlayer film was cut into a size of 100 cm long × 100 cm wide. The cut interlayer film was sandwiched between Green glass 4 and Green glass 4, and temporarily press-bonded by a vacuum bagging method. The temporarily press-bonded laminate was retained for 10 minutes in an autoclave at a temperature of 140°C and a pressure of 1.3 MPa, and then the temperature was lowered to 50°C to complete final press-bonding to obtain a laminated glass.

### (Examples 2 and 3)

An interlayer film and laminated glass were obtained in the same manner as that in Example 1 except that the kind of the lamination glass member was changed to that shown in Table 2.

### (Example 4)

### Preparation of resin composition for forming first layer:

A composition for forming a first layer was obtained in the same manner as that in Example 1.

### Preparation of resin composition for forming second layer and third layer:

The following ingredients were mixed, and kneaded sufficiently with a mixing roll to obtain a resin composition for forming a second layer and a third layer.

PVB2: 100 parts by weight 3GO: 40 parts by weight
Perylene compound (P.R.149): an amount which is to be 0.0023% by weight in the obtained second layer and third layer.
Phthalocyanine compound (P.B.15:1): an amount which is to be 0.0004% by weight in the obtained second layer and third layer.
Tinuvin 326: an amount which is to be 0.2% by weight in the obtained second layer and third layer
BHT: an amount which is to be 0.2% by weight in the obtained second layer and third layer

### Preparation of interlayer film:

An interlayer film was obtained in the same manner as that in Example 1.

### Preparation of laminated glass:

A laminated glass was obtained in the same manner as that in Example 1.

### (Examples 5, 6, 10 and 11)

An interlayer film and laminated glass were obtained in the same manner as that in Example 4 except that the kind of the lamination glass member was changed to that shown in Tables 3, 5.

### (Examples 7 to 9)

An interlayer film and laminated glass were obtained in the same manner as that in Example 1 except that the content of the pigment and the kind of the lamination glass member were changed to those shown in Table 4.

### (Example 12)

### Preparation of resin composition for forming first layer:

A composition for forming a first layer was obtained in the same manner as that in Example 1.

### Preparation of resin composition for forming second layer and third layer:

The following ingredients were mixed, and kneaded sufficiently with a mixing roll to obtain a resin composition for forming a second layer and a third layer.

PVB2: 100 parts by weight
3GO: 40 parts by weight
Perylene compound (P.R.149) : an amount which is to be 0.0023% by weight in the obtained second layer and third layer.
Tinuvin 326: an amount which is to be 0.2% by weight in the obtained second layer and third layer
BHT: an amount which is to be 0.2% by weight in the obtained second layer and third layer

### Preparation of interlayer film:

By coextruding the resin composition for forming a first layer and the resin composition for forming a second layer and a third layer using a coextruder, a wedge-like interlayer film having a three-layer structure (second layer/first layer/third layer) was prepared. In the obtained wedge-like interlayer film, the distance between the one end and the other end was 100 cm, the thickness of the one end was 0.76 mm, the thickness of the other end was 1.52 mm, and the wedge angle was 0.76 mrad.

### Preparation of laminated glass:

A laminated glass was obtained in the same manner as that in Example 1.

### (Examples 13 to 22)

An interlayer film and laminated glass were obtained in the same manner as that in Example 12 except that the kind and the content of the pigment and the kind of the lamination glass member were changed to those shown in Tables 6 to 9. In Examples 18 to 20, a perylene compound (P.R.149) in an amount which is to be 0.0023% by weight in the second layer and the third layer, and a phthalocyanine compound (P.B.15:1) in an amount which is to be 0.0001% by weight in the second layer and the third layer are used. In Examples 21, 22, a perylene compound (P.R.149) in an amount which is to be 0.0023% by weight in the second layer and the third layer, and a phthalocyanine compound (P.B.15:1) in an amount which is to be 0.0004% by weight in the second layer and the third layer are used.

### (Comparative Example 1)

An interlayer film and a laminated glass were obtained in the same manner as that in Example 1 except that a pigment was not used.

### (Comparative Examples 2 to 9)

An interlayer film and laminated glass were obtained in the same manner as that in Comparative Example 1 except that the kind of the lamination glass member was changed to that shown in Tables 10 to 12.

### (Example 23)

### Preparation of resin composition for forming first layer:

A composition for forming a first layer was obtained in the same manner as that in Example 1.

### Preparation of resin composition for forming second layer and third layer:

The following ingredients were mixed, and kneaded sufficiently with a mixing roll to obtain a resin composition for forming a second layer and a third layer.

PVB2: 100 parts by weight
3GO: 40 parts by weight
Perylene compound (P.R.149): an amount which is to be 0.0040% by weight in the obtained second layer and third layer.
Phthalocyanine compound (P.B.15:1): an amount which is to be 0.0050% by weight in the obtained second layer and third layer.
Carbon black (P.Bla.7): an amount which is to be 0.0030% by weight in the obtained second layer and third layer.
Tinuvin 326: an amount which is to be 0.2% by weight in the obtained second layer and third layer
BHT: an amount which is to be 0.2% by weight in the obtained second layer and third layer

### Preparation of interlayer film:

An interlayer film was obtained in the same manner as that in Example 1.

### Preparation of laminated glass:

A laminated glass was obtained in the same manner as that in Example 1 except that the kind of the lamination glass member was changed to that shown in Table 13.

### (Examples 24 to 26, 34 and 36 to 38)

An interlayer film and laminated glass were obtained in the same manner as that in Example 23 except that the kind and the content of the pigment and the kind of the lamination glass member were changed to those shown in Tables 13, 14 and 18 to 20. In Examples 24 to 26, 34 and 36, three kinds of pigments were used in the content shown in each of Tables 13, 14, 18 and 19. In Examples 37 and 38, four kinds of pigments were used in the content shown in Table 20.

### (Example 27)

### Preparation of resin composition for forming first layer:

A composition for forming a first layer was obtained in the same manner as that in Example 1.

### Preparation of resin composition for forming second layer and third layer:

The following ingredients were mixed, and kneaded sufficiently with a mixing roll to obtain a resin composition for forming a second layer and a third layer.

PVB2: 100 parts by weight
3GO: 40 parts by weight
Perylene compound (P.R.149): an amount which is to be 0.0040% by weight in the obtained second layer and third layer.
Phthalocyanine compound (P.B.15:1): an amount which is to be 0.0050% by weight in the obtained second layer and third layer.
Carbon black (P.Bla.7): an amount which is to be 0.0030% by weight in the obtained second layer and third layer.
ITO particles: an amount which is to be 0.20% by weight in the obtained second layer and third layer.
Tinuvin 326: an amount which is to be 0.2% by weight in the obtained second layer and third layer
BHT: an amount which is to be 0.2% by weight in the obtained second layer and third layer

### Preparation of interlayer film:

An interlayer film was obtained in the same manner as that in Example 1.

### Preparation of laminated glass:

A laminated glass was obtained in the same manner as that in Example 1 except that the kind of the lamination glass member was changed to that shown in Table 15.

### (Examples 28 to 33, 35, 39 and 40)

An interlayer film and a laminated glass were obtained in the same manner as that in Example 27 except that the kind and the content of the pigment, the kind and the content of the heat shielding particles, and the kind of the lamination glass member were changed to those shown in Tables 15 to 19 and 21. In Examples 28 to 31 and 35, one kind of heat shielding particles were used in the content shown in each of Tables 15 to 17 and 19. In Examples 32, 33, 39 and 40, two kinds of heat shielding particles were used in the content shown in each of Tables 17, 18 and 21. In Examples 28 to 33 and 35, three kinds of pigments were used in the content shown in each of Tables 15 to 19. In Examples 39 and 40, four kinds of pigments were used in the content shown in Table 21.

### (Evaluation)

### (1) Visible light transmittance (Tv), color coordinate a*, color coordinate b* and color coordinate L*

### (1-1) Preparation of measuring object

As a measuring object, the followings were prepared.

### 1) Lamination glass member

A lamination glass member itself was given as a measuring object.

### 2) Lamination glass member laminate

### Two lamination glass members, namely, the first lamination glass member and the second lamination glass member were layered, and a lamination glass member laminate in the state that only these two lamination glass members are layered was given as a measuring object.

### 3) Interlayer film

The interlayer film was sandwiched between two polyethylene terephthalate sheets (PET sheets, "polyester film Lumirror #100-T60" available from TORAY INDUSTRIES, INC.) to obtain a first laminate. The obtained first laminate was sandwiched between two sheets of glass and fixed with a heat-resistant tape to obtain a second laminate. The obtained second laminate was subjected to preliminary pressing and an autoclave treatment. Then, the two sheets of glass and the two sheets of PET sheets were peeled off to obtain the interlayer film. In this way, the uneven surfaces (embossed surfaces) of the interlayer film were made into flat surfaces. This interlayer film was given as a measuring object.

### 4) Laminated glass

The obtained laminated glass was given as a measuring object.

### (1-2) Measurement of visible light transmittance (Tv)

Visible light transmittance at a wavelength ranging from 380 nm to 780 nm of a measuring object was measured by using a spectrophotometer ("U-4100" available from Hitachi High-Tech Science Corporation) in accordance with JIS R3212.

### (1-3) Measurement of color coordinate a*, color coordinate b* and color coordinate L*

Transmittance of a measuring object at a wavelength ranging from 380 nm to 780 nm was measured using a spectrophotometer ("U-4100" available from Hitachi High-Tech Science Corporation), and color coordinate a*, color coordinate b* and color coordinate L* were measured using a CIE standard illuminant D65 defined by JIS Z8781, and a 10° color matching function. In Examples 12 to 22 in which a wedge-like interlayer film is used, each of the color coordinates was measured at a center position between the one end and the other end, namely, at a position corresponding to a position where the thickness of the produced interlayer film (thickness of the interlayer film before being prepared into laminated glass) is 1.14 mm.

Also, the laminated glasses obtained in Examples 1 to 40 were visually observed, and they had an achromatic color or a color close to achromatic color. On the other hand, the laminated glasses obtained in Comparative Examples 1 to 9 were visually observed, and they had greenish color.

### (2) Heat shielding property of laminated glass (Tts)

Transmittance and reflectance at a wavelength ranging from 300 nm to 2500 nm of a laminated glass were measured using a spectrophotometer ("U-4100" available from Hitachi High-Tech Corporation), and Tts (Total reflectance) was measured in accordance with ISO 13837.

### (3) Heat shielding property of laminated glass (Te)

Transmittance at a wavelength ranging from 300 nm to 2500 nm of a laminated glass was measured using ("U-4100" available from Hitachi High-Tech Corporation), and Te (Transmittance Energy) was measured in a range from 300 nm to 2100 nm in accordance with JIS R3106.

The configurations and the results of laminated glasses are shown in the following Tables 2 to 21.

**[Table 2]**

| | | Example 1 | Example 2 | Example 3 |
|---|---|---|---|---|
| First lamination glass member | Kind | Green glass 4 | Green glass 2 | Green glass 1 |
| Second lamination glass member | Kind | Green glass 4 | Green glass 3 | Clear glass |
| Lamination glass member laminate | Tv (%) | 72.7 | 73.7 | 73.0 |
| | L* | 88.8 | 89.3 | 89.0 |
| | a* | -4.7 | -4.9 | -4.9 |
| | b* | 1.1 | 0. 9 | 1.4 |
| | Thickness (mm) | 3.6 | 3.7 | 4.6 |
| Interlayer film | Tv (%) | 85.2 | 85.2 | 85.2 |
| | L* | 93.1 | 93.1 | 93.1 |
| | a* | 5.7 | 5.7 | 5.7 |
| | b* | 2.3 | 2.3 | 2.3 |
| | Thickness (mm) | 0.76 | 0.76 | 0.76 |
| Pigment in interlayer film | Kind | P.R.149 | P.R.149 | P.R.149 |
| Content of pigment in 100% by weight of second layer and 100% by weight of third layer (% by weight) | | 0.0023 | 0.0023 | 0.0023 |
| Laminated glass | Tv (%) | 74.5 | 74.2 | 73.5 |
| | L* | 89.0 | 88.9 | 88.3 |
| | a* | 0.7 | 0.5 | 0.5 |
| | b* | 2.7 | 2.6 | 3.2 |
| | Tts (%) | 64.2 | 63.5 | 63.2 |
| | Te (%) | 52.6 | 51.6 | 51.4 |
| | Thickness (mm) | 4.36 | 4.46 | 5.36 |
| Sum of a* of lamination glass member laminate and a* of interlayer film | | 0.9 | 0.8 | 0.8 |
| Absolute value of difference between a* of lamination glass member laminate and a* of interlayer film | | 10.4 | 10.5 | 10.5 |
| Product of a* of lamination glass member laminate and a* of interlayer film | | -26.8 | -27.5 | -27.6 |

**[Table 3]**

| | | Example 4 | Example 5 | Example 6 |
|---|---|---|---|---|
| First lamination glass member | Kind | Green glass 4 | Green glass 2 | Green glass 1 |
| Second lamination glass member | Kind | Green glass 4 | Green glass 3 | Clear glass |
| Lamination glass member laminate | Tv (%) | 72.7 | 73.7 | 73.0 |
| | L* | 88.8 | 89.3 | 89.0 |
| | a* | -4.7 | -4.9 | -4.9 |
| | b* | 1.1 | 0. 9 | 1.4 |
| | Thickness (mm) | 3.6 | 3.7 | 4.6 |
| Interlayer film | Tv (%) | 83.9 | 83.9 | 83.9 |
| | L* | 92.7 | 92.7 | 92.7 |
| | a* | 4.2 | 4.2 | 4.2 |
| | b* | 1.6 | 1.6 | 1.6 |
| | Thickness (mm) | 0.76 | 0.76 | 0.76 |
| Pigment in interlayer film | Kind | P.R.149/P.B.15:1 | P.R.149/P.B.15:1 | P.R.149/P.B.15:1 |
| Content of pigment in 100% by weight of second layer and 100% by weight of third layer (% by weight) | | 0.0027 | 0.0027 | 0.0027 |
| | | (0.0023/0.0004) | (0.0023/0.0004) | (0.0023/0.0004) |
| Laminated glass | Tv (%) | 73.5 | 73.3 | 72.6 |
| | L* | 88.6 | 88.5 | 88.1 |
| | a* | -0.7 | -0.9 | -0.9 |
| | b* | 2.1 | 1.9 | 2.5 |
| | Tts (%) | 63.6 | 63.0 | 62.9 |
| | Te (%) | 51.8 | 51.8 | 50.9 |
| | Thickness (mm) | 4.36 | 4.46 | 5.36 |
| Sum of a* of lamination glass member laminate and a* of interlayer film | | -0.5 | -0.7 | -0.7 |
| Absolute value of difference between a* of lamination glass member laminate and a* of interlayer film | | 8.9 | 9.1 | 9.1 |
| Product of a* of lamination glass member laminate and a* of interlayer film | | -19.9 | -20.4 | -20.5 |

**[Table 4]**

| | | Example 7 | Example 8 | Example 9 |
|---|---|---|---|---|
| First lamination glass member | Kind | Green glass 5 | Green glass 6 | Green glass 6 |
| Second lamination glass member | Kind | Green glass 5 | Green glass 5 | Green glass 6 |
| Lamination glass member laminate | Tv (%) | 72.6 | 70.9 | 69.3 |
| | L* | 88.8 | 88.0 | 87.3 |
| | a* | -5.2 | -5.9 | -6.7 |
| | b* | 1.6 | 1.8 | 2.0 |
| | Thickness (mm) | 3.2 | 3.7 | 4.2 |
| Interlayer film | Tv (%) | 87.5 | 87.5 | 87.5 |
| | L* | 94.3 | 94.3 | 94.3 |
| | a* | 3.7 | 3.7 | 3.7 |
| | b* | 1.8 | 1.8 | 1.8 |
| | Thickness (mm) | 0.76 | 0.76 | 0.76 |
| Pigment in interlayer film | Kind | P.R.149 | P.R.149 | P.R.149 |
| Content of pigment in 100% by weight of second layer and 100% by weight of third layer (% by weight) | | 0.0015 | 0.0015 | 0.0015 |
| Laminated glass | Tv (%) | 75.1 | 73.2 | 71.6 |
| | L* | 89.4 | 88.6 | 87.9 |
| | a* | -1.7 | -2.5 | -3.3 |
| | b* | 2 . 9 | 3.2 | 3.3 |
| | Tts (%) | 62.8 | 60.4 | 58.4 |
| | Te (%) | 50.7 | 47.1 | 44.2 |
| | Thickness (mm) | 3.96 | 4.46 | 4.96 |
| Sum of a* of lamination glass member laminate and a* of interlayer film | | -1.4 | -2.2 | -2.9 |
| Absolute value of difference between a* of lamination glass member laminate and a* of interlayer film | | 8 . 9 | 9.7 | 10.4 |
| Product of a* of lamination glass member laminate and a* of interlayer film | | -19.3 | -22.2 | -24 . 9 |

**[Table 5]**

| | | Example 10 | Example 11 |
|---|---|---|---|
| First lamination glass member | Kind | Green glass 5 | Green glass 6 |
| Second lamination glass member | Kind | Green glass 5 | Green glass 5 |
| Lamination glass member laminate | Tv (%) | 72.6 | 70.9 |
| | L* | 88.8 | 88.0 |
| | a* | -5.2 | -5.9 |
| | b* | 1.6 | 1.8 |
| | Thickness (mm) | 3.2 | 3.7 |
| Interlayer film | Tv (%) | 83.9 | 83.9 |
| | L* | 92.7 | 92.7 |
| | a* | 4.2 | 4.2 |
| | b* | 1.6 | 1.6 |
| | Thickness (mm) | 0.76 | 0.76 |
| Pigment in interlayer film | Kind | P.R.149/P.B.15:1 | P.R.149/P.B.15:1 |
| Content of pigment in 100% by weight of second layer and 100% by weight of third layer (% by weight) | | 0.0027 | 0.0027 |
| | | (0.0023/0.0004) | (0.0023/0.0004) |
| Laminated glass | Tv (%) | 72.5 | 70.5 |
| | L* | 88.1 | 87.3 |
| | a* | -1.3 | -2.0 |
| | b* | 2.6 | 2.9 |
| | Tts (%) | 62.0 | 59.5 |
| | Te (%) | 49.5 | 46.0 |
| | Thickness (mm) | 3.96 | 4.46 |
| Sum of a* of lamination glass member laminate and a* of interlayer film | | -1.0 | -1.7 |
| Absolute value of difference between a* of lamination glass member laminate and a* of interlayer film | | 9.4 | 10.1 |
| Product of a* of lamination glass member laminate and a* of interlayer film | | -21.7 | -24 . 9 |

**[Table 6]**

| | | Example 12 | Example 13 | Example 14 |
|---|---|---|---|---|
| First lamination glass member | Kind | Green glass 4 | Green glass 2 | Green glass 1 |
| Second lamination glass member | Kind | Green glass 4 | Green glass 3 | Clear glass |
| Lamination glass member laminate | Tv (%) | 72.7 | 73.7 | 73.0 |
| | L* | 88.8 | 89.3 | 89.0 |
| | a* | -4.7 | -4.9 | -4.9 |
| | b* | 1.1 | 0. 9 | 1.4 |
| | Thickness (mm) | 3.6 | 3.7 | 4.6 |
| Interlayer film | Tv (%) | 82.9 | 82.9 | 82.9 |
| | L* | 91.7 | 91.7 | 91.7 |
| | a* | 7.5 | 7.5 | 7.5 |
| | b* | 3.3 | 3.3 | 3.3 |
| | Thickness (mm) | 1.14 | 1.14 | 1.14 |
| Pigment in interlayer film | Kind | P.R.149 | P.R.149 | P.R.149 |
| Content of pigment in 100% by weight of second layer and 100% by weight of third layer (% by weight) | | 0.0023 | 0.0023 | 0.0023 |
| Laminated glass | Tv (%) | 72.6 | 72.5 | 70.9 |
| | L* | 87.6 | 87.6 | 86.8 |
| | a* | 2.5 | 2.3 | 2.2 |
| | b* | 3.6 | 3.4 | 4.0 |
| | Tts (%) | 62.7 | 62.2 | 61.9 |
| | Te (%) | 51.0 | 50.1 | 49.7 |
| | Thickness (mm) | 4.74 | 4.84 | 5.74 |
| Sum of a* of lamination glass member laminate and a* of interlayer film | | 2.8 | 2.7 | 2.6 |
| Absolute value of difference between a* of lamination glass member laminate and a* of interlayer film | | 12.3 | 12.4 | 12.4 |
| Product of a* of lamination glass member laminate and a* of interlayer film | | -35.6 | -36.6 | -36.7 |

**[Table 7]**

| | | Example 15 | Example 16 | Example 17 |
|---|---|---|---|---|
| First lamination glass member | Kind | Green glass 4 | Green glass 2 | Green glass 1 |
| Second lamination glass member | Kind | Green glass 4 | Green glass 3 | Clear glass |
| Lamination glass member laminate | Tv (%) | 72.7 | 73.7 | 73.0 |
| | L* | 88.8 | 89.3 | 89.0 |
| | a* | -4.7 | -4.9 | -4.9 |
| | b* | 1.1 | 0. 9 | 1.4 |
| | Thickness (mm) | 3.6 | 3.7 | 4.6 |
| Interlayer film | Tv (%) | 83.9 | 83.9 | 83.9 |
| | L* | 92.7 | 92.7 | 92.7 |
| | a* | 4.2 | 4.2 | 4.2 |
| | b* | 1.6 | 1.6 | 1.6 |
| | Thickness (mm) | 1.14 | 1.14 | 1.14 |
| Pigment in interlayer film | Kind | P.R.149 | P.R.149 | P.R.149 |
| Content of pigment in 100% by weight of second layer and 100% by weight of third layer (% by weight) | | 0.0015 | 0.0015 | 0.0015 |
| Laminated glass | Tv (%) | 74.9 | 74.9 | 73.7 |
| | L* | 89.1 | 89.1 | 88.5 |
| | a* | 0.2 | 0.0 | 0.0 |
| | b* | 3.0 | 2.8 | 3.4 |
| | Tts (%) | 63.5 | 63.0 | 62.8 |
| | Te (%) | 51.9 | 51.1 | 50.8 |
| | Thickness (mm) | 4.74 | 4.84 | 5.74 |
| Sum of a* of lamination glass member laminate and a* of interlayer film | | -0.5 | -0.7 | -0.7 |
| Absolute value of difference between a* of lamination glass member laminate and a* of interlayer film | | 8.9 | 9.1 | 9.1 |
| Product of a* of lamination glass member laminate and a* of interlayer film | | -19.9 | -20.4 | -20.5 |

**[Table 8]**

| | | Example 18 | Example 19 | Example 20 |
|---|---|---|---|---|
| First lamination glass member | Kind | Green glass 4 | Green glass 2 | Green glass 1 |
| Second lamination glass member | Kind | Green glass 4 | Green glass 3 | Clear glass |
| Lamination glass member laminate | Tv (%) | 72.7 | 73.7 | 73.0 |
| | L* | 88.8 | 89.3 | 89.0 |
| | a* | -4.7 | -4.9 | -4.9 |
| | b* | 1.1 | 0. 9 | 1.4 |
| | Thickness (mm) | 3.6 | 3.7 | 4.6 |
| Interlayer film | Tv (%) | 82.5 | 82.5 | 82.5 |
| | L* | 91.6 | 91.6 | 91.6 |
| | a* | 7 . 4 | 7.4 | 7.4 |
| | b* | 3.0 | 3.0 | 3.0 |
| | Thickness (mm) | 1.14 | 1.14 | 1.14 |
| Pigment in interlayer film | Kind | P.R.149/P.B.15:1 | P.R.149/P.B.15:1 | P.R.149/P.B.15:1 |
| Content of pigment in 100% by weight of second layer and 100% by weight of third layer (% by weight) | | 0.0024 | 0.0024 | 0.0024 |
| | | (0.0023/0.0001) | (0.0023/0.0001) | (0.0023/0.0001) |
| Laminated glass | Tv (%) | 72.6 | 71.7 | 71.2 |
| | L* | 87 . 7 | 87.3 | 87.0 |
| | a* | 2.1 | 2.0 | 2.0 |
| | b* | 3.3 | 3.3 | 3.8 |
| | Tts (%) | 62.7 | 61.9 | 62.0 |
| | Te (%) | 50.9 | 49.7 | 49.8 |
| | Thickness (mm) | 4.74 | 4.84 | 5.74 |
| Sum of a* of lamination glass member laminate and a* of interlayer film | | 2.7 | 2.5 | 2.5 |
| Absolute value of difference between a* of lamination glass member laminate and a* of interlayer film | | 12.1 | 12.3 | 12.3 |
| Product of a* of lamination glass member laminate and a* of interlayer film | | -35.0 | -36.0 | -36.1 |

**[Table 9]**

| | | Example 21 | Example 22 |
|---|---|---|---|
| First lamination glass member | Kind | Green glass 4 | Green glass 2 |
| Second lamination glass member | Kind | Green glass 4 | Green glass 3 |
| Lamination glass member laminate | Tv (%) | 72.7 | 73.7 |
| | L* | 88.8 | 89.3 |
| | a* | -4.7 | -4.9 |
| | b* | 1.1 | 0.9 |
| | Thickness (mm) | 3.6 | 3.7 |
| Interlayer film | Tv (%) | 80.7 | 80.7 |
| | L* | 91.1 | 91.1 |
| | a* | 5.7 | 5.7 |
| | b* | 2.3 | 2.3 |
| | Thickness (mm) | 1.14 | 1.14 |
| Pigment in interlayer film | Kind | P.R.149/P.B.15:1 | P.R.149/P.B.15:1 |
| Content of pigment in 100% by weight of second layer and 100% by weight of third layer (% by weight) | | 0.0027 | 0.0027 |
| | | (0.0023/0.0004) | (0.0023/0.0004) |
| Laminated glass | Tv (%) | 71.0 | 70.6 |
| | L* | 87.2 | 87.0 |
| | a* | 0.7 | 0.5 |
| | b* | 2.7 | 2.6 |
| | Tts (%) | 62.2 | 61.5 |
| | Te (%) | 50.1 | 49.1 |
| | Thickness (mm) | 4.74 | 4.84 |
| Sum of a* of lamination glass member laminate and a* of interlayer film | | 1.0 | 0.8 |
| Absolute value of difference between a* of lamination glass member laminate and a* of interlayer film | | 10.4 | 10.6 |
| Product of a* of lamination glass member laminate and a* of interlayer film | | -27.0 | -27.8 |

**[Table 10]**

| | | Comparative Example 1 | Comparative Example 2 | Comparative Example 3 |
|---|---|---|---|---|
| First lamination glass member | Kind | Green glass 4 | Green glass 2 | Green glass 1 |
| Second lamination glass member | Kind | Green glass 4 | Green glass 3 | Clear glass |
| Lamination glass member laminate | Tv (%) | 72.7 | 73.7 | 73.0 |
| | L* | 88.8 | 89.3 | 89.0 |
| | a* | -4.7 | -4.9 | -4.9 |
| | b* | 1.1 | 0. 9 | 1.4 |
| | Thickness (mm) | 3.6 | 3.7 | 4.6 |
| Interlayer film | Tv (%) | 90.7 | 90.7 | 90.7 |
| | L* | 96.2 | 96.2 | 96.2 |
| | a* | -0.4 | -0.4 | -0.4 |
| | b* | 1.3 | 1.3 | 1.3 |
| | Thickness (mm) | 0.76 | 0.76 | 0.76 |
| Pigment in interlayer film | Kind | - | - | - |
| Content of pigment in 100% by weight of second layer and 100% by weight of third layer (% by weight) | | - | - | - |
| Laminated glass | Tv (%) | 80.4 | 80.3 | 79.1 |
| | L* | 92.4 | 92.3 | 91.8 |
| | a* | -5.3 | -5.4 | -5.5 |
| | b* | 1.8 | 1.7 | 2.3 |
| | Tts (%) | 65.8 | 65.3 | 65.1 |
| | Te (%) | 54.7 | 53.9 | 53.7 |
| | Thickness (mm) | 4.36 | 4.46 | 5.36 |
| Sum of a* of lamination glass member laminate and a* of interlayer film | | -5.2 | -5.3 | -5.3 |
| Absolute value of difference between a* of lamination glass member laminate and a* of interlayer film | | 4.3 | 4.4 | 4.5 |
| Product of a* of lamination glass member laminate and a* of interlayer film | | 2.0 | 2.1 | 2.1 |

**[Table 11]**

| | | Comparative Example 4 | Comparative Example 5 | Comparative Example 6 |
|---|---|---|---|---|
| First lamination glass member | Kind | Green glass 5 | Green glass 6 | Green glass 6 |
| Second lamination glass member | Kind | Green glass 5 | Green glass 5 | Green glass 6 |
| Lamination glass member laminate | Tv (%) | 72.6 | 70.9 | 69.3 |
| | L* | 88.8 | 88.0 | 87.3 |
| | a* | -5.2 | -5.9 | -6.7 |
| | b* | 1.6 | 1.8 | 2.0 |
| | Thickness (mm) | 3.2 | 3.7 | 4.2 |
| Interlayer film | Tv (%) | 90.7 | 90.7 | 90.7 |
| | L* | 96.2 | 96.2 | 96.2 |
| | a* | -0.4 | -0.4 | -0.4 |
| | b* | 1.3 | 1.3 | 1.3 |
| | Thickness (mm) | 0.76 | 0.76 | 0.76 |
| Pigment in interlayer film | Kind | - | - | - |
| Content of pigment in 100% by weight of second layer and 100% by weight of third layer (% by weight) | | - | - | - |
| Laminated glass | Tv (%) | 78.7 | 76.8 | 74.9 |
| | L* | 91.6 | 90.8 | 90.0 |
| | a* | -5.7 | -6.5 | -7.2 |
| | b* | 2.4 | 2.6 | 2.8 |
| | Tts (%) | 63.9 | 61.6 | 59.5 |
| | Te (%) | 52.1 | 48.7 | 45.5 |
| | Thickness (mm) | 3.96 | 4.46 | 4.96 |
| Sum of a* of lamination glass member laminate and a* of interlayer film | | -5.6 | -6.4 | -7.1 |
| Absolute value of difference between a* of lamination glass member laminate and a* of interlayer film | | 4.7 | 5.5 | 6.2 |
| Product of a* of lamination glass member laminate and a* of interlayer film | | 2.2 | 2.5 | 2.8 |

**[Table 12]**

| | | Comparative Example 7 | Comparative Example 8 | Comparative Example 9 |
|---|---|---|---|---|
| First lamination glass member | Kind | Green glass 7 | Green glass 8 | Green glass 9 |
| Second lamination glass member | Kind | Green glass 7 | Green glass 8 | Green glass 9 |
| Lamination glass member laminate | Tv (%) | 73.0 | 66.3 | 68.7 |
| | L* | 88.9 | 85.7 | 87.0 |
| | a* | -4.7 | -7.1 | -6.4 |
| | b* | 1.0 | 4.8 | 1.5 |
| | Thickness (mm) | 4.0 | 4.0 | 4.0 |
| Interlayer film | Tv (%) | 90.7 | 90.7 | 90.7 |
| | L* | 96.2 | 96.2 | 96.2 |
| | a* | -0.4 | -0.4 | -0.4 |
| | b* | 1.3 | 1.3 | 1.3 |
| | Thickness (mm) | 0.76 | 0.76 | 0.76 |
| Pigment in interlayer film | Kind | - | - | - |
| Content of pigment in 100% by weight of second layer and 100% by weight of third layer (% by weight) | | - | - | - |
| Laminated glass | Tv (%) | 79.6 | 73.0 | 75.4 |
| | L* | 92.0 | 88.8 | 90.1 |
| | a* | -5.3 | -7.6 | -7.1 |
| | b* | 1.7 | 7.0 | 3.8 |
| | Tts (%) | 66.1 | 58.2 | 60.3 |
| | Te (%) | 55.2 | 44.1 | 47.0 |
| | Thickness (mm) | 4.76 | 4.76 | 4.76 |
| Sum of a* of lamination glass member laminate and a* of interlayer film | | -5.1 | -7.5 | -6.9 |
| Absolute value of difference between a* of lamination glass member laminate and a* of interlayer film | | 4.3 | 6.6 | 6.0 |
| Product of a* of lamination glass member laminate and a* of interlayer film | | 2.0 | 3.0 | 2.7 |

**[Table 13]**

| | | Example 23 | Example 24 |
|---|---|---|---|
| First lamination glass member | Kind | Green glass 7 | Green glass 8 |
| Second lamination glass member | Kind | Green glass 7 | Green glass 8 |
| Lamination glass member laminate | Tv (%) | 73.0 | 66.3 |
| | L* | 88.9 | 85.7 |
| | a* | -4.7 | -7.1 |
| | b* | 1.0 | 4.8 |
| | Thickness (mm) | 4.0 | 4.0 |
| Interlayer film | Tv (%) | 60.1 | 41.7 |
| | L* | 81.5 | 70.5 |
| | a* | 4.8 | 4.8 |
| | b* | -1.9 | -5.1 |
| | Thickness (mm) | 0.76 | 0.76 |
| Pigment in interlayer film | Kind | P.R.149/P.B.15:1/P.Bla.7 | P.R.149/P.B.15:1/P.Bla.7 |
| Content of pigment in 100% by weight of second layer and 100% by weight of third layer (% by weight) | | 0.0120 | 0.0210 |
| | | (0.0040/0.0050/0.0030) | (0.0060/0.0100/0.0050) |
| Laminated glass | Tv (%) | 47.7 | 30.3 |
| | L* | 74.7 | 62.1 |
| | a* | -0.2 | -2.1 |
| | b* | -0.3 | 1.0 |
| | Tts (%) | 55.2 | 44.5 |
| | Te (%) | 40.0 | 25.2 |
| | Thickness (mm) | 4.76 | 4.76 |
| Sum of a* of lamination glass member laminate and a* of interlayer film | | 0.1 | -2.2 |
| Absolute value of difference between a* of lamination glass member laminate and a* of interlayer film | | 9.5 | 11.9 |
| Product of a* of lamination glass member laminate and a* of interlayer film | | -22.5 | -34.1 |

**[Table 14]**

| | | Example 25 | Example 26 |
|---|---|---|---|
| First lamination glass member | Kind | Green glass 9 | Green glass 9 |
| Second lamination glass member | Kind | Green glass 9 | Green glass 9 |
| Lamination glass member laminate | Tv (%) | 68.7 | 68.7 |
| | L* | 87.0 | 87.0 |
| | a* | -6.4 | -6.4 |
| | b* | 1.5 | 1.5 |
| | Thickness (mm) | 4.0 | 4.0 |
| Interlayer film | Tv (%) | 23.3 | 2.5 |
| | L* | 55.4 | 17.6 |
| | a* | 2.8 | 4.0 |
| | b* | -4.5 | -1.1 |
| | Thickness (mm) | 0.76 | 0.76 |
| Pigment in interlayer film | Kind | P.R.149/P.B.15:1/P.Bla.7 | P.R.149/P.B.15:1/P.Bla.7 |
| Content of pigment in 100% by weight of second layer and 100% by weight of third layer (% by weight) | | 0.0330 | 0.0810 |
| | | (0.0070/0.0150/0.0110) | (0.0150/0.0330/0.0330) |
| Laminated glass | Tv (%) | 17.5 | 1.9 |
| | L* | 49.3 | 14.6 |
| | a* | -2.5 | 0.8 |
| | b* | -1.7 | 0.0 |
| | Tts (%) | 39.7 | 30.6 |
| | Te (%) | 18.7 | 6.0 |
| | Thickness (mm) | 4.76 | 4.76 |
| Sum of a* of lamination glass member laminate and a* of interlayer film | | -3.6 | -2.5 |
| Absolute value of difference between a* of lamination glass member laminate and a* of interlayer film | | 9.3 | 10.4 |
| Product of a* of lamination glass member laminate and a* of interlayer film | | -18.2 | -25.4 |

**[Table 15]**

| | | Example 27 | Example 28 |
|---|---|---|---|
| First lamination glass member | Kind | Green glass 7 | Green glass 9 |
| Second lamination glass member | Kind | Green glass 7 | Green glass 9 |
| Lamination glass member laminate | Tv (%) | 73.0 | 68.7 |
| | L* | 88.9 | 87.0 |
| | a* | -4.7 | -6.4 |
| | b* | 1.0 | 1.5 |
| | Thickness (mm) | 4.0 | 4.0 |
| Interlayer film | Tv (%) | 59.1 | 2.5 |
| | L* | 80.9 | 17.4 |
| | a* | 4.5 | 3.8 |
| | b* | -1.7 | -1.1 |
| | Thickness (mm) | 0.76 | 0.76 |
| Pigment in interlayer film | Kind | P.R.149/P.B.15:1/P.Bla.7 | P.R.149/P.B.15:1/P.Bla.7 |
| Content of pigment in 100% by weight of second layer and 100% by weight of third layer (% by weight) | | 0.0120 | 0.0810 |
| | | (0.0040/0.0050/0.0030) | (0.0150/0.0330/0.0330) |
| Heat shielding particles in interlayer film | Kind | ITO particles | ITO particles |
| Content of heat shielding particles in 100% by weight of second layer and 100% by weight of third layer (% by weight) | | 0.20 | 0.20 |
| Laminated glass | Tv (%) | 46.9 | 1.8 |
| | L* | 74.2 | 14.5 |
| | a* | -0.5 | 0.7 |
| | b* | -0.1 | 0.1 |
| | Tts (%) | 50.6 | 29.0 |
| | Te (%) | 33.7 | 3.8 |
| | Thickness (mm) | 4.76 | 4.76 |
| Sum of a* of lamination glass member laminate and a* of interlayer film | | -0.2 | -2.6 |
| Absolute value of difference between a* of lamination glass member laminate and a* of interlayer film | | 9.2 | 10.2 |
| Product of a* of lamination glass member laminate and a* of interlayer film | | -21.1 | -24.5 |

**[Table 16]**

| | | Example 29 | Example 30 |
|---|---|---|---|
| First lamination glass member | Kind | Green glass 7 | Green glass 8 |
| Second lamination glass member | Kind | Green glass 7 | Green glass 8 |
| Lamination glass member laminate | Tv (%) | 73.0 | 66.3 |
| | L* | 88.9 | 85.7 |
| | a* | -4.7 | -7.1 |
| | b* | 1.0 | 4.8 |
| | Thickness (mm) | 4.0 | 4.0 |
| Interlayer film | Tv (%) | 56.2 | 21.8 |
| | L* | 79.5 | 54.0 |
| | a* | 3.3 | 1.7 |
| | b* | -2.4 | -4.8 |
| | Thickness (mm) | 0.76 | 0.76 |
| Pigment in interlayer film | Kind | P.R.149/P.B.15:1/P.Bla.7 | P.R.149/P.B.15:1/P.Bla.7 |
| Content of pigment in 100% by weight of second layer and 100% by weight of third layer (% by weight) | | 0.0120 | 0.0330 |
| | | (0.0040/0.0050/0.0030) | (0.0070/0.0150/0.0110) |
| Heat shielding particles in interlayer film | Kind | CWO particles | CWO particles |
| Content of heat shielding particles in 100% by weight of second layer and 100% by weight of third layer (% by weight) | | 0.06 | 0.06 |
| Laminated glass | Tv (%) | 44.6 | 15.8 |
| | L* | 72.9 | 47.2 |
| | a* | -1.5 | -3.9 |
| | b* | -0.7 | 0.2 |
| | Tts (%) | 47.8 | 35.1 |
| | Te (%) | 29.8 | 12.3 |
| | Thickness (mm) | 4.76 | 4.76 |
| Sum of a* of lamination glass member laminate and a* of interlayer film | | -1.4 | -5.4 |
| Absolute value of difference between a* of lamination glass member laminate and a* of interlayer film | | 8.0 | 8.7 |
| Product of a* of lamination glass member laminate and a* of interlayer film | | -15.6 | -11.7 |

**[Table 17]**

| | | Example 31 | Example 32 |
|---|---|---|---|
| First lamination glass member | Kind | Green glass 8 | Green glass 7 |
| Second lamination glass member | Kind | Green glass 8 | Green glass 7 |
| Lamination glass member laminate | Tv (%) | 66.3 | 73.0 |
| | L* | 85.7 | 88.9 |
| | a* | -7.1 | -4.7 |
| | b* | 4.8 | 1.0 |
| | Thickness (mm) | 4.0 | 4.0 |
| Interlayer film | Tv (%) | 2.4 | 21.9 |
| | L* | 16.9 | 54.1 |
| | a* | 3.2 | 1.9 |
| | b* | -1.3 | -4.4 |
| | Thickness (mm) | 0.76 | 0.76 |
| Pigment in interlayer film | Kind | P.R.149/P.B.15:1/P.Bla.7 | P.R.149/P.B.15:1/P.Bla.7 |
| Content of pigment in 100% by weight of second layer and 100% by weight of third layer (% by weight) | | 0.0810 | 0.0330 |
| | | (0.0150/0.0330/0.0330) | (0.0070/0.0150/0.0110) |
| Heat shielding particles in interlayer film | Kind | CWO particles | ITO particles/ CWO particles |
| Content of heat shielding particles in 100% by weight of second layer and 100% by weight of third layer (% by weight) | | 0.06 | 0.26 |
| | | | (0.20/0.06) |
| Laminated glass | Tv (%) | 1.7 | 17.4 |
| | L* | 13.6 | 49.2 |
| | a* | 0.0 | -1.9 |
| | b* | 0.9 | -2.9 |
| | Tts (%) | 28.5 | 36.9 |
| | Te (%) | 3.2 | 14.8 |
| | Thickness (mm) | 4.76 | 4.76 |
| Sum of a* of lamination glass member laminate and a* of interlayer film | | -3.8 | -2.8 |
| Absolute value of difference between a* of lamination glass member laminate and a* of interlayer film | | 10.3 | 6.6 |
| Product of a* of lamination glass member laminate and a* of interlayer film | | -22.7 | -8.9 |

**[Table 18]**

| | | Example 33 | Example 34 |
|---|---|---|---|
| First lamination glass member | Kind | Green glass 9 | Green glass 7 |
| Second lamination glass member | Kind | Green glass 9 | Green glass 7 |
| Lamination glass member laminate | Tv (%) | 68.7 | 73.0 |
| | L* | 87.0 | 88.9 |
| | a* | -6.4 | -4.7 |
| | b* | 1.5 | 1.0 |
| | Thickness (mm) | 4.0 | 4.0 |
| Interlayer film | Tv (%) | 2.4 | 91.8 |
| | L* | 16.9 | 96.3 |
| | a* | 3.4 | 4.4 |
| | b* | -1.1 | -1.8 |
| | Thickness (mm) | 0.76 | 0.76 |
| Pigment in interlayer film | Kind | P.R.149/P.B.15:1/P.Bla.7 | P.Y.150/P.B.15:3/P.R.209 |
| Content of pigment in 100% by weight of second layer and 100% by weight of third layer (% by weight) | | 0.0810 | 0.0068 |
| | | (0.0150/0.0330/0.0330) | (0.0004/0.0007/0.0057) |
| Heat shielding particles in interlayer film | Kind | ITO particles/ CWO particles | - |
| Content of heat shielding particles in 100% by weight of second layer and 100% by weight of third layer (% by weight) | | 0.26 | - |
| | | (0.20/0.06) | |
| Laminated glass | Tv (%) | 1.8 | 73.0 |
| | L* | 14.1 | 88.6 |
| | a* | 0.4 | -1.0 |
| | b* | 0.1 | 0.0 |
| | Tts (%) | 28.2 | 64.2 |
| | Te (%) | 2.8 | 52.4 |
| | Thickness (mm) | 4.76 | 4.76 |
| Sum of a* of lamination glass member laminate and a* of interlayer film | | -3.1 | -0.3 |
| Absolute value of difference between a* of lamination glass member laminate and a* of interlayer film | | 9.8 | 9.1 |
| Product of a* of lamination glass member laminate and a* of interlayer film | | -21.7 | -20.8 |

**[Table 19]**

| | | Example 35 | Example 36 |
|---|---|---|---|
| First lamination glass member | Kind | Green glass 7 | Green glass 8 |
| Second lamination glass member | Kind | Green glass 7 | Green glass 8 |
| Lamination glass member laminate | Tv (%) | 73.0 | 66.3 |
| | L* | 88.9 | 85.7 |
| | a* | -4.7 | -7.1 |
| | b* | 1.0 | 4.8 |
| | Thickness (mm) | 4.0 | 4.0 |
| Interlayer film | Tv (%) | 91.9 | 58.8 |
| | L* | 96.2 | 80.8 |
| | a* | 4.5 | 6.3 |
| | b* | 0.3 | -6.0 |
| | Thickness (mm) | 0.76 | 0.76 |
| Pigment in interlayer film | Kind | P.Y.150/P.B.15:3/P.R.209 | P.B.15:3/P.R.209/P.Bla7 |
| Content of pigment in 100% by weight of second layer and 100% by weight of third layer (% by weight) | | 0.0068 | 0.0217 |
| | | (0.0008/0.0004/0.0056) | (0.0038/0.0141/0.0038) |
| Heat shielding particles in interlayer film | Kind | ITO particles | - |
| Content of heat shielding particles in 100% by weight of second layer and 100% by weight of third layer (% by weight) | | 0.16 | - |
| Laminated glass | Tv (%) | 73.0 | 42.9 |
| | L* | 88 . 4 | 71.4 |
| | a* | -0.9 | -0.8 |
| | b* | 1.9 | 0.7 |
| | Tts (%) | 59.8 | 48.1 |
| | Te (%) | 46.4 | 30.3 |
| | Thickness (mm) | 4.76 | 4.76 |
| Sum of a* of lamination glass member laminate and a* of interlayer film | | -0.2 | -0.8 |
| Absolute value of difference between a* of lamination glass member laminate and a* of interlayer film | | 9.2 | 13.4 |
| Product of a* of lamination glass member laminate and a* of interlayer film | | -21.2 | -44.4 |

**[Table 20]**

| | | Example 37 | Example 38 |
|---|---|---|---|
| First lamination glass member | Kind | Green glass 9 | Green glass 7 |
| Second lamination glass member | Kind | Green glass 9 | Green glass 7 |
| Lamination glass member laminate | Tv (%) | 68.7 | 73.0 |
| | L* | 87.0 | 88.9 |
| | a* | -6.4 | -4.7 |
| | b* | 1.5 | 1.0 |
| | Thickness (mm) | 4.0 | 4.0 |
| Interlayer film | Tv (%) | 22.1 | 2.8 |
| | L* | 53.8 | 18.7 |
| | a* | 3.5 | 1.7 |
| | b* | -3.2 | -0.3 |
| | Thickness (mm) | 0.76 | 0.76 |
| Pigment in interlayer film | Kind | P.Y.150/P.B.15:3/P.R.209/P.Bla7 | P.Y.150/P.B.15:3/P.R.209/P.Bla7 |
| Content of pigment in 100% by weight of second layer and 100% by weight of third layer (% by weight) | | 0.0596 | 0.1326 |
| | | (0.0040/0.0113/0.0330/0.0113) | (0.0096/0.0250/0.0680/0.0300) |
| Laminated glass | Tv (%) | 16.6 | 2.2 |
| | L* | 47.9 | 16.3 |
| | a* | -1.0 | 0.1 |
| | b* | -0.7 | 0.2 |
| | Tts (%) | 38.8 | 32.4 |
| | Te (%) | 17.4 | 8.6 |
| | Thickness (mm) | 4.76 | 4.76 |
| Sum of a* of lamination glass member laminate and a* of interlayer film | | -2.9 | -3.0 |
| Absolute value of difference between a* of lamination glass member laminate and a* of interlayer film | | 10.0 | 6.5 |
| Product of a* of lamination glass member laminate and a* of interlayer film | | -22.7 | -8.2 |

**[Table 21]**

| | | Example 39 | Example 40 |
|---|---|---|---|
| First lamination glass member | Kind | Green glass 7 | Green glass 9 |
| Second lamination glass member | Kind | Green glass 7 | Green glass 9 |
| Lamination glass member laminate | Tv (%) | 73.0 | 68.7 |
| | L* | 88.9 | 87.0 |
| | a* | -4.7 | -6.4 |
| | b* | 1.0 | 1.5 |
| | Thickness (mm) | 4.0 | 4.0 |
| Interlayer film | Tv (%) | 22.1 | 2.7 |
| | L* | 53.9 | 18.3 |
| | a* | 2.8 | 2.5 |
| | b* | -1.7 | -1.3 |
| | Thickness (mm) | 0.76 | 0.76 |
| Pigment in interlayer film | Kind | P. Y. 150/P. B. 15:3/P. R. 209/P. B la7 | P.Y.150/P.B.15:3/P.R.209/P.E la7 |
| Content of pigment in 100% by weight of second layer and 100% by weight of third layer (% by weight) | | 0.0583 | 0.1300 |
| | | (0.0047/0.0105/0.0326/0. 0105) | (0.0080/0.0240/0.0680/0. 0300) |
| Heat shielding particles in interlayer film | Kind | ITO particles/ CWO particles | ITO particles/ CWO particles |
| Content of heat shielding particles in 100% by weight of second layer and 100% by weight of third layer (% by weight) | | 0.26 | 0.26 |
| | | (0.20/0.06) | (0.20/0.06) |
| Laminated glass | Tv (%) | 17.6 | 2.0 |
| | L* | 49.0 | 15.4 |
| | a* | -0.5 | 0.3 |
| | b* | -0.5 | -0.1 |
| | Tts (%) | 35.5 | 28.1 |
| | Te (%) | 12.9 | 2.6 |
| | Thickness (mm) | 4.76 | 4.76 |
| Sum of a* of lamination glass member laminate and a* of interlayer film | | -2.0 | -4.0 |
| Absolute value of difference between a* of lamination glass member laminate and a* of interlayer film | | 7.5 | 8.9 |
| Product of a* of lamination glass member laminate and a* of interlayer film | | -13.0 | -15.8 |

### EXPLANATION OF SYMBOLS

1, 1B: First layer
1a, 1Ba: First surface
1b, 1Bb: Second surface
2, 2B: Second layer
3, 3B: Third layer
11, 11A, 11B: Colored interlayer film
11a, 11Aa, 11Ba: First surface
11b, 11Ab, 11Bb: Second surface
21: First lamination glass member
22: Second lamination glass member
31, 31A, 31B: Laminated glass

## Claims

1. A laminated glass comprising:
a first lamination glass member which is colored glass;
a second lamination glass member; and
a colored interlayer film,
the colored interlayer film being arranged between the first lamination glass member and the second lamination glass member,
the laminated glass having a color coordinate a* in L*a*b* color system of -5 or more and 5 or less, and a color coordinate b* in L*a*b* color system of -5 or more and 5 or less.

2. The laminated glass according to claim 1, wherein a product of a color coordinate a* in L*a*b* color system of a lamination glass member laminate which is a laminate of the first lamination glass member and the second lamination glass member, and a color coordinate a* in L*a*b* color system of the colored interlayer film is a negative value.

3. The laminated glass according to claim 1 or 2, wherein a sum of a color coordinate a* in L*a*b* color system of a lamination glass member laminate which is a laminate of the first lamination glass member and the second lamination glass member, and a color coordinate a* in L*a*b* color system of the colored interlayer film is 4 or less.

4. The laminated glass according to any one of claims 1 to 3, wherein a color coordinate L* in L*a*b* color system is 84 or more and 98 or less.

5. The laminated glass according to any one of claims 1 to 4, wherein the first lamination glass member is green glass.

6. The laminated glass according to any one of claims 1 to 5, wherein the second lamination glass member is colored glass.

7. The laminated glass according to any one of claims 1 to 6, wherein the colored interlayer film contains a thermoplastic resin.

8. The laminated glass according to any one of claims 1 to 7, wherein a color coordinate a* in L*a*b* color system of the colored interlayer film is 2 or more and 10 or less.

9. The laminated glass according to any one of claims 1 to 8, wherein the colored interlayer film contains a coloring agent.

10. The laminated glass according to any one of claims 1 to 9, wherein the colored interlayer film contains a pigment.

11. The laminated glass according to claim 10, wherein the pigment contains a perylene compound, a threne compound, a quinacridone compound, a diketopyrrolopyrrole compound, an anthraquinone compound, a perinone compound, a phthalocyanine compound, an indanthrene compound, an indigo compound, a nickel complex compound, an azo compound or carbon black.

12. The laminated glass according to claim 10 or 11, wherein a content of the pigment in 100% by weight of the colored interlayer film is 0.5% by weight or less.

13. The laminated glass according to claim 12, wherein a content of the pigment in 100% by weight of the colored interlayer film is less than 0.015% by weight.

14. The laminated glass according to any one of claims 1 to 13, wherein the colored interlayer film includes a first layer, and a second layer arranged on a first surface side of the first layer.

15. The laminated glass according to any one of claims 1 to 14, wherein
the laminated glass has one end and the other end being at the opposite side of the one end, and
the other end has a thickness larger than a thickness of the one end.

16. The laminated glass according to any one of claims 1 to 15, wherein the colored interlayer film has a gradation pattern in plan view.
